# EUROPEAN PATENT APPLICATION

(11) **EP 3 539 924 A1**
(43) Date of publication of application: **18.09.2019**
(21) Application number: 18161811.7
(22) Date of filing: 14.03.2018
(51) Int. Cl.: C01B 25/08, C07F 9/50, C07F 9/53, C07F 9/30, C08F 2/50

(54) **NOVEL VINYL PHOSPHINES AND PHOTO-INITIATORS OBTAINABLE THEREFROM**

(71) Applicant: ETH Zurich, 8092 Zurich (CH)
(72) Inventor: GRÜTZMACHER, Hansjörg, 8157 Dielsdorf (CH); BISPINGHOFF, Mark, 8050 Zürich (CH)

(57) **Abstract**

The present invention relates to novel bisacylphosphine oxides, bisacylphosphinic acids, salts, and derivatives thereof each bearing a vinyl functionality bound to the phosphorous atom as well as the use of aforementioned compounds as photo-initiators. The invention further encompasses a versatile process for the preparation of such compounds including a highly efficient process to prepare alkyl and vinyl phosphines required as starting materials.

## Description

The present invention relates to novel bisacylphosphine oxides, bisacylphosphinic acids, salts, and derivatives thereof each bearing a vinyl functionality bound to the phosphorous atom as well as the use of aforementioned compounds as photo-initiators. The invention further encompasses a versatile process for the preparation of such compounds including a highly efficient process to prepare alkyl and vinyl phosphines required as starting materials.

Photo-initiators such mono- and bisacylphosphine oxides, including those bearing further functionalized substituents have attracted significant commercial attention since photo-initiators, which are tunable with respect to the wavelength at which photo-induced cleavage occurs or which are linkable to other additives, such as sensitizers, stabilizers or surface active agents in order to avoid migration e.g. in food packaging, are highly desirable.

Further, water solubility has become an increasingly interesting property for photo-initiators in general to cope with soaring demand for environmental friendly production of coatings, adhesives, inks and painting materials e.g. for water-borne UV-inkjet inks and to expand their applicability into interesting new fields such as fabrication of hydrogels for tissue engineering.

However, the synthesis of mono- and bisacylphosphines as frequently used intermediates for the corresponding oxides or phosphinic acids as well as their salts and derivatives typically require the use of highly reactive phosphines such as phosphine (PH₃), primary phosphines, RPH₂ or secondary phosphines, R₂PH but their structural variability to accomplish above tasks is typically low.

Processes to prepare mono- and bisacylphosphine oxides an their precursors are known e.g. from WO2006/056541A, WO2010/121387A and WO2011/003772A.

EP 1 135 399 A discloses a process for the preparation of mono- and bisacylphosphines and their respective oxides and sulfides. The process comprises the steps of reacting substituted monohalophosphines (R₂PCl) or dihalophosphines (RPCl₂) with an alkali metal or a combination of magnesium and lithium, where appropriate in the presence of a catalyst, further reacting the resulting metallated phosphines with carboxylic acid halides and finally oxidizing the resulting mono- or bisacylphosphines with sulfur or oxygen transferring oxidants.

It is further known from WO05/014605A to prepare substituted acylphosphines via a process comprising the steps of first reacting monohalophosphines (R₂PCl) or dihalophosphines (RPCl₂) with an alkali metal in a solvent in the presence of a proton source and then reacting the phosphines obtained thereby with carboxylic acid halides.

WO2006/074983A discloses a process for the preparation of bisacylphosphines by first catalytically reducing monohalophosphines (R₂PCl) or dihalophosphines (RPCl₂) with hydrogen at a temperature of from 20 to 200°C under pressure in the presence of a tertiary aliphatic amine or an aromatic amine in an aprotic solvent to obtain the corresponding halogen-free phosphines and subsequently reacting said phosphines with carboxylic acid halides to obtain mono- or bisacylphosphines.

The required primary phosphines, RPH₂ or secondary phosphines, R₂PH are typically prepared by reacting the corresponding halo- or dihalophosphanes or their respective oxides with lithium aluminum hydride. Thereby alkyl- or dialkylphosphines are obtained in very moderate yields.

Primary or secondary vinyl phosphines may be obtained via reaction of vinylmagnesium halides and halophosphines as disclosed in US 3,048,638 or Fedorov, S. V.; Krivdin, L. B.; Rusakov, Y. Y.; Chemysheva, N. A.; Mikhailenko, V. L., Magnetic Resonance in Chemistry, 2010, S48 or by reduction of vinylphosphonate by AlHCl₂ (see Cabioch, J. L.; Denis, J. M., J. Orgmet. Chem., 1989, 227)

Primary and secondary phosphines may further be prepared by reacting phosphine (PH₃) with alkenes in the presence of acids or acidic catalysts as disclosed e.g. in Hoff, M. C.; Hill, P., Journal of Organic Chemistry, 1959, 356, US 4,922,025, EP 057 924 A, US 5,536,880, US 5,892,120 or by free-radical addition of alkenes to phosphine (PH₃) as disclosed e.g. in Stiles, A. R.; Rust, F. F.; Vaughan, W. E., JACS, 1952, 3282, US4163760 or by thermal addition of functionalized alkenes to phosphine (PH₃) (see WO2004/094440).

However, a common feature of all methods listed above is that harsh reaction conditions are required, the yields are low and selectivity is poor, which renders these processes commercially highly unattractive.

It is apparent to those skilled in the art that the aforementioned synthetic routes just allow a limited variation for the organic non-carbonyl residues directly bound to the phosphorous in particular when considering commercial availability.

Just recently, attempts to overcome this limitation were successful: WO2014/053455 A1 discloses novel mono- and bisacylphosphine oxides comprising additional functional groups inter alia those allowing crosslinking via pendant acrylic functions. Such functional groups were introduced via addition of electron-poor olefins to mono- and bisacylphosphines or their corresponding salts.

However, there was still a need for highly photo-active photo-initiators bearing substituents allowing crosslinking and/or variation of known substitution patterns and a versatile process for their preparation.

The invention therefore encompasses compounds of formula (I): 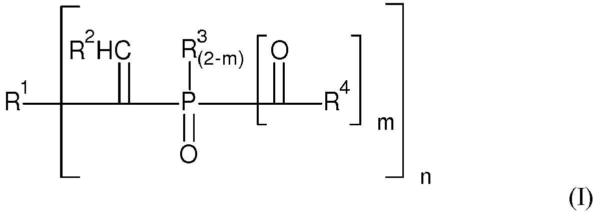 wherein
- **n**: is an integer, preferably an integer from 1 to 6, more preferably 1, 2, 3 or 4, and even more preferably 1 or 2 and most preferably 1
- **m**: is 1 or 2
- **R¹ if n is 1**: is hydrogen, alkyl, alkenyl, alkynyl or aryl
- **R¹, if n is > 1**: is alkane-n-yl, alkene-n-yl alkyne-n-yl or aryl-n-yl
- **R²**: is hydrogen alkyl, alkenyl, alkynyl or aryl
- **R³**: is alkyl, alkenyl, alkynyl, C₆-C₁₄-aryl that is unsubstituted or substituted by up to three identical or different substituents selected from the group consisting of fluorine, C₁-C₈-alkyl, C₁-C₈-haloalkyl and phenyl or is -(O⁻)(Cat⁺) wherein -(O⁻)(Cat⁺) as a whole represents hydroxy or Cat⁺ represents 1/p equivalents of a p-valent cation
- **R⁴**: is alkyl, alkenyl, alkynyl, aryl or heterocyclyl,
whereby
for R¹ the aforementioned alkyl, alkenyl, alkynyl, alkane-n-yl, alkene-n-yl alkyne-n-yl substituents and for R² and R³ the aforementioned alkyl, alkenyl and alkynyl substituents are
- either not, once, twice or more than twice interrupted by bivalent residues selected from the group consisting of unsubstituted aryldiyl
   and additionally or alternatively are
- either not, once, twice or more than twice substituted by substituents selected from the group consisting of unsubstituted aryl and halogen, preferably selected from the group consisting of unsubstituted aryldiyl
   and whereby
   for R⁴ the aforementioned alkyl, alkenyl and alkynyl substituents are
- either not, once, twice or more than twice interrupted by non-successive functional groups selected from the group consisting of:
   -O-, -NR⁵-, -CO-, -OCO-, -O(CO)O-, NR⁵(CO)-, -NR⁵(CO)O-, O(CO)NR⁵-, - NR⁵(CO)NR⁵-,
   and additionally or alternatively are
- either not, once, twice or more than twice interrupted by bivalent residues selected from the group consisting of heterocyclo-diyl, and aryldiyl,
   and additionally or alternatively are
- either not, once, twice or more than twice substituted by substituents selected from the group consisting of:
   hydroxy, protected hydroxy, protected formyl, halogen, cyano, C₆-C₁₄-aryl; heterocyclyl, C₁-C₈-alkoxy, C₆-C₁₄-aryloxy, C₆-C₁₄-arylthio, C₁-C₈-alkylthio, - COOM, -SO₃M, -PO₃M₂, -PO(N(R⁵)₂)₂, -N(R⁵)₂, -PO(OR⁶)₂, SO₂N(R⁵)₂, - NR⁵SO₂R⁶, -N(R⁵)₂-, -N⁺(R⁵)₃An⁻, -CON(R⁵)₂, -COR⁵, -(CO)OR⁵, -O(CO)OR⁶, NR⁵(CO)R⁵, -NR⁵(CO)OR⁵, O(CO)N(R⁵)₂, -NR⁵(CO)N(R⁵)₂, -Si(OR⁶)_{y}(R⁶)_{3-y}, - OSi(OR⁶)_{y}(R⁶)_{3-y} with y = 1, 2 or 3
   whereby in all formulae where used
   - R⁵: is independently selected from the group consisting of hydrogen, C₁-C₈-alkyl, C₆-C₁₄-aryl, and heterocyclyl or N(R⁵)₂ as a whole is a N-containing heterocycle,
   - R⁶: is independently selected from the group consisting of C₁-C₈-alkyl, C₆-C₁₄-aryl, and heterocyclyl or N(R⁶)₂ as a whole is a N-containing heterocycle
   - M: is hydrogen, or 1/q equivalent of an q-valent metal ion or is an ammonium ion, a guanidinium ion, a once or more N-substituted guanidinium ion or a primary, secondary, tertiary or quarternary organic ammonium ion, in particular those of formula [N(C₁-C₁₈-alkyl)ₛHₜ]⁺ wherein s is 1, 2, 3 or 4 and t is (4-s) or heterocyclylium and
   - An⁻: is 1/r equivalent of a r-valent anion.

The scope of the invention encompasses all combinations of substituent definitions, parameters and illustrations set forth above and below, either in general or within areas of preference or preferred embodiments, with one another, i.e., also any combinations between the particular areas and areas of preference.

Whenever used herein the terms "including", "e.g.", "such as" and "like" are meant in the sense of "including but without being limited to" or "for example without limitation", respectively.

As used herein, and unless specifically stated otherwise, **aryl** denotes carbocyclic aromatic substituents, whereby said carbocyclic, aromatic substituents are unsubstituted or substituted by up to five identical or different substituents per cycle. For example and with preference, the substituents are selected from the group consisting of fluorine, bromine, chlorine, iodine, nitro, cyano, formyl or protected formyl, hydroxy or protected hydroxy, C₁-C₈-alkyl, C₁-C₈-haloalkyl, C₁-C₈-alkoxy, C₁-C₈-haloalkoxy, C₆-C₁₄-aryl, in particular phenyl and naphthyl, di(C₁-C₈-alkyl)amino, (C₁-C₈-alkyl)amino, CO(C1-C8-alkyl), OCO(C1-C8-alkyl), NHCO(C1-C8-alkyl), N(C1-C8-alkyl)CO(C1-C8-alkyl), CO(C6-C14-aryl), OCO(C6-C14-aryl), NHCO(C6-C14-aryl), N(C1-C8-alkyl)CO(C6-C14-aryl), COO-(C1-C8-alkyl), COO-(C6-C14-aryl), CON(C1-C8-alkyl)2 or CONH(C1-C8-alkyl), CO2M, CONH2, SO2NH2, SO2N(C1-C8-alkyl)2, SO3M and PO3M2.

In a preferred embodiment, the carbocyclic, aromatic substituents are unsubstituted or substituted by up to three identical or different substituents per cycle selected from the group consisting of fluorine, chlorine, cyano, C₁-C₈-alkyl, C₁-C₈-haloalkyl, C₁-C₈-alkoxy, C₁-C₈-haloalkoxy, C₆-C₁₄-aryl, in particular phenyl.

In a more preferred embodiment the carbocyclic, aromatic substituents are unsubstituted or substituted by up to three identical or different substituents per cycle selected from the group consisting of fluorine, C₁-C₈-alkyl, C₁-C₈-fluoroalkyl and phenyl, which are in an even more preferred embodiment not positioned in the ortho-positions.

The definitions given above, including their areas of preference, also apply analogously to **aryloxy, arylthio, aryldiyl** and **aryl-n-yl** substituents. Preferred aryl substituents are C₆-C₁₄-aryl substituents, more preferably phenyl, naphthyl, phenanthrenyl and anthracenyl.

Preferred aryldiyl substituents are C₆-C₁₄-aryldiyl substituents, more preferably 1,2-, 1,3- or 1,4-phenylene. The term C₆-C₁₄ indicates that the number of carbon atoms of the respective carbocyclic, aromatic ring system is from 6 to 14. The possible and preferred substitution patterns mentioned above are likewise applicable.

As used herein and unless specifically stated otherwise, **heterocyclyl** denotes heterocyclic aliphatic, aromatic or mixed aliphatic and aromatic substituents in which no, one, two or three skeleton atoms per cycle, but at least one skeleton atom in the entire cyclic system is a heteroatom selected from the group consisting of phosphorous, nitrogen, sulphur and oxygen, preferably nitrogen, sulphur and oxygen, whereby such heterocyclic aliphatic, aromatic or mixed aliphatic and aromatic substituents are unsubstituted or substituted by up to the possible limit identical or different substituents per cycle, whereby the substituents are selected from the same group as given above for carbocyclic aromatic substituents including the areas of preference.

Preferred heterocyclyl-substituents and heteroaryl-substituents respectively are pyridinyl, oxazolyl, thiophenyl, benzofuranyl, benzothiophenyl, dibenzofuranyl, dibenzothiophenyl, furanyl, indolyl, pyridazinyl, pyrazinyl, imidazolyl, pyrimidinyl and quinolinyl, either unsubstituted or substituted with one, two or three substituents selected from the group consisting of hydroxy, protected hydroxy, chloro, fluorine, C₁-C₈-alkyl, C₁-C₈-fluoroalkyl, C₁-C₈-alkoxy, C₁-C₈-fluoroalkoxy, and phenyl. One skilled in the art is aware that e.g. heteroaryl-substituents bearing a hydroxyl group adjacent to e.g. nitrogen are typically depicted or denoted as keto compounds (e.g. pyridone for 2-hydroxypyridine). These tautomeric forms shall be encompassed by above definition as well.

The definitions given above, including their areas of preference, also apply analogously to **heterocyclylium** and **heteroarylium** cations and the bivalent **heterocyclo-diyl** and **heteroaryldiyl** substituents.

Preferred **heterocyclylium** cations are N-(C₁-C₈-alkyl)imidazolium or pyridinium cations.

As used herein, and unless specifically stated otherwise, **protected formyl** is a formyl substituent which is protected by conversion to an aminal, acetal or a mixed aminal acetal, whereby the aminals, acetals and mixed aminal acetals are either acyclic or cyclic.

For example, and with preference, protected formyl is 1,1-(2,4-dioxycyclopentanediyl).

As used herein, and unless specifically stated otherwise, **protected hydroxy** is a hydroxy radical which is protected by conversion to a ketal, acetal or a mixed aminal acetal, whereby the aminals, acetals and mixed aminal acetals are either acyclic or cyclic. A specific example of protected hydroxy is tetrahydropyranyl (O-THP).

As used herein, and unless specifically stated otherwise, **alkyl, alkanediyl, alkenyl, alkenediyl, alkynyl, alkane-n-yl, alkene-n-yl, alkyne-n-yl, alkoxy** and **alkylthio** are straight-chained, cyclic either in part or as a whole, branched or unbranched and if not expressly mentioned otherwise are neither interrupted nor substituted by any functional groups.

The term **C₁-C₁₈-alkyl** indicates that the straight-chained, cyclic either in part or as a whole, branched or unbranched alkyl substituent contains from 1 to 18 carbon atoms excluding the carbon atoms of optionally present substituents to the C₁-C₁₈-alkyl substituent. The same analogously applies to **alkanediyl, alkenyl, alkenediyl, alkynyl, alkane-n-yl, alkene-n-yl, alkyne-n-yl, alkoxy** and **alkylthio** having an indicated number of carbon atoms and further substituents having an indicated number of carbon atoms.

For the avoidance of doubt the term alkenyl denotes a substituent comprising at least one carbon-carbon double bond but also more than one double bond, irrespective of its or their location within the straight-chained, cyclic either in part or as a whole, branched or unbranched substituent. The same applies to alkene-n-yl.

For the avoidance of doubt the term alkynyl denotes a substituent comprising at least one carbon-carbon triple bond but also more than one double bond, irrespective of its or their location within the straight-chained, cyclic either in part or as a whole, branched or unbranched substituent. The same applies to alkyne-n-yl.

Specific examples of C₁-C₄-alkyl are methyl, ethyl, n-propyl, isopropyl, n-butyl, tert-butyl. Additional examples for C₁-C₈-alkyl are n-pentyl, isopentyl, cyclohexyl, n-hexyl, n-heptyl, n-octyl, isooctyl. Additional examples for C₁-C₁₈-alkyl are norbornyl, adamantyl, n-decyl, n-dodecyl, n-hexadecyl, n-octadecyl.

Specific examples of C₁-C₈-alkanediyl-substituents are methylene, 1,1-ethylene, 1,2-ethylene, 1,1-propylene, 1,2-propylene, 1,3-propylene, 1,1-butylene, 1,2-butylene, 2,3-butylene and 1,4-butylene, 1,5-pentylene, 1,6-hexylene, 1,1-cyclohexylene, 1,4-cyclohexylene, 1,2-cyclohexylene and 1,8-octylene.

Specific examples of C₁-C₄-alkoxy-substituents are methoxy, ethoxy, isopropoxy, n-propoxy, n-butoxy and tert-butoxy. An additional example for C₁-C₈-alkoxy is cyclohexyloxy.

Specific examples of C₂-C₁₈-alkenyl and C₂-C₈-alkenyl-substituents include vinyl, allyl, 3-propenyl and buten-2-yl.

Specific examples of C₂-C₁₈-alkynyl and C₂-C₈-alkynyl-substituents include ethinyl.

As used hereinabove, **C₁-C₈-haloalkyl** and **C₁-C₈-haloalkoxy** are **C₁-C₈-alkyl** and **C₁-C₈**-**alkoxy** substituents which are once, more than once or fully substituted by halogen atoms. Substituents which are partially or fully substituted by fluorine are referred to as **C₁-C₈**-**fluoroalkyl** and **C₁-C₈-fluoroalkoxy,** respectively.

Specific examples of C₁-C₈-haloalkyl-substituents are fluoromethyl, difluoromethyl, trifluoromethyl, 2,2,2-trifluoroethyl, chloromethyl, fluoromethyl, bromomethyl, 2-bromoethyl, 2-chloroethyl, nonafluorobutyl and n-perfluorooctyl.

Preferred compounds of formula (I) are those wherein
- **n**: is 1
- **m**: is 1 or 2
- **R¹**: is hydrogen, alkyl or aryl
- **R²**: is hydrogen alkyl or aryl
- **R³**: is alkenyl, phenyl unsubstituted or substituted once, twice or three times by substituents selected from the group consisting of C₁-C₄-alkyl or C₁-C₄-haloalkyl or is -(O⁻)(Cat⁺) wherein -(O⁻)(Cat⁺) as a whole represents -OH or Cat⁺ represents 1/p equivalents of a p-valent cation
- **R⁴**: is aryl
whereby
for R¹ and R² the aforementioned alkyl substituents or
for R³ or the aforementioned alkenyl substituents are
- either not, once, twice or more than twice substituted by substituents selected from the group consisting of unsubstituted aryl.

Even more preferred compounds of formula (I) are those wherein
- **n**: is 1
- **m**: is 2
- **R¹**: is hydrogen, C₁-C₆-alkyl or phenyl
- **R²**: is hydrogen, C₁-C₆-alkyl or phenyl
- **R³**: is alkenyl, or -(O⁻)(Cat⁺) wherein -(O⁻)(Cat⁺) as a whole represents -OH or Cat⁺ represents 1/p equivalents of a p-valent cation
- **R⁴**: is C₆-C₁₄-aryl
whereby
for R¹ and R² the aforementioned alkyl substituents or
for R³ or the aforementioned alkenyl substituents are
- either not, once, twice or more than twice substituted by substituents selected from the group consisting of unsubstituted aryl

Preferred compounds of formula (I) include those of formula (II): 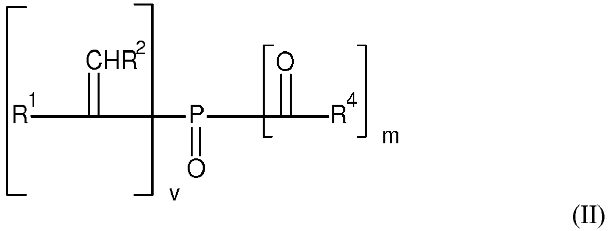 wherein
- **m**: is 1 or 2 and
- **v**: is (3-m)
and R¹, R² and R⁴ have the meaning including the preferred embodiments indicated above.

For the avoidance of doubt and in order to explain how formula (II) reads on formula (I) it is noted that in formula (I) n needs to be 1 and R³ needs to be the following alkenyl substituent -[R¹C=CHR²] if m is 1.

Preferred compounds of formula (I) also include those of formula (III): 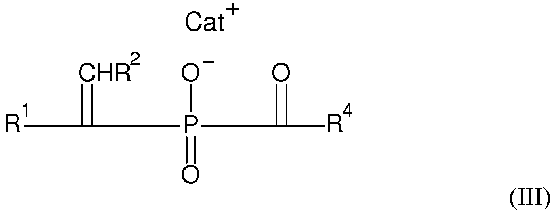 wherein
-(O⁻)(Cat⁺) as a whole represents -OH or Cat⁺ represents 1/p equivalents of a p-valent cation
and R¹, R² and R⁴ have the meaning including the preferred embodiments indicated above.

In another preferred embodiment -(O⁻)(Cat⁺) as a whole represents -OH or Cat⁺ represents lithium, sodium, potassium, ammonium, guanidinium, quarternary ammonium of formula [N(C₁-C₄-alkyl)ₛHₜ]⁺ wherein s is 1, 2, 3 or 4 and t is (4-s), guanidinium that is once, twice three times or four times N-substituted with s (C₁-C₄-alkyl) or heterocyclylium.

In an even more preferred embodiment -(O⁻)(Cat⁺) as a whole represents -OH or Cat⁺ is selected from the group consisting of hydrogen, lithium, sodium, potassium, quarternary ammonium of formula [N(C₁-C₄-alkyl)₄]⁺ and tetra-N-methyl-guanidinium or di-N(C₁-C₈-alkyl)-imidazolium.

Examples of substituents -[R¹C=CHR²] include vinyl (ethenyl), 1-phenyl-ethen-1-yl, 1,2-diphenylethen-1-yl, and 3-hexen-3-yl, whereby 1-phenyl-ethen-1-yl, 1,2-diphenylethen-1-yl, and 3-hexen-3-yl are preferably in Z-configuration.

Examples of substituents R⁴ include phenyl, p-tert.-butylphenyl, 3-cyanophenyl, 4-cyanophenyl, 4-methylphenyl, 3-methylphenyl, 3,5-dimethylphenyl, 2,4,6-trimethylphenyl (mesityl), 4-methoxyphenyl, 3-methoxyphenyl, 2,6-dimethoxyphenyl, 2,4-dimethoxyphenyl, p-chlorophenyl, 3,4-dichlorophenyl, 4-bromophenyl, 3-bromophenyl, 4-iodophenyl, 3-iodophenyl, 3,4-dibromophenyl, 4-nitrophenyl, 3-nitrophenyl, p-trifluoromethyl, p-ethoxycarbonyl-phenyl, p-methoxycarbonylphenyl and p-isopropylphenyl, whereby phenyl is even more preferred.

Specific compounds of formula (I) include:
Bis(2,4,6-trimethylbenzoyl)-vinyl-phosphine oxide (also referred to as vinyl-bis(mesitoyl)phosphine oxide), bis(2,4,6-trimethylbenzoyl)-(1-phenylethen-1-yl)-phosphine oxide, bis(2,4,6-trimethylbenzoyl)-(3-hexen-3-yl)-phosphine oxide, (2,4,6-trimethylbenzoyl)-vinyl-phosphinic acid, (2,4,6-trimethylbenzoyl)-vinyl-phosphinic acid sodium salt, (2,4,6-trimethylbenzoyl)-vinyl-phosphinic acid tetra-(n-butyl) ammonium salt, (2,4,6-trimethylbenzoyl)-vinyl-phosphinic acid 1,1,3,3-tetra-*N*-methyl-guanidinium salt, bis-(benzoyl)-vinyl-phosphine oxide, bis(benzoyl)-(1-phenylethen-1-yl)-phosphine oxide, bis(benzoyl)-(3-hexen-3-yl)-phosphine oxide, (benzoyl)-vinyl-phosphinic acid, (benzoyl)-vinyl-phosphinic acid sodium salt, (benzoyl)-vinyl-phosphinic acid tetra-(n-butyl) ammonium salt, (benzoyl)-vinyl-phosphinic acid 1,1,3,3-tetra-*N*-methyl-guanidinium salt, 1-phenylethenyl-bis(2,4,6-trimethylbenzoyl)phosphine oxide and 1-methylethenyl-bis(2,4,6-trimethylbenzoyl)phosphine oxide.

Compounds of formula (I) may be prepared by the following methods which are also encompassed by the invention:

### Preparation method A:

Compounds of formula (I) may be prepared for example by a process comprising the steps of:
a) reacting compounds of formula (IV) 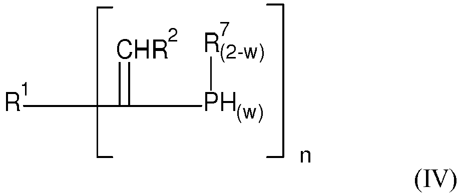 wherein
   - w: is 1 or 2 and
   - n, R¹ and R²: have the same meaning including preferred embodiments as defined for formula (I) above and
   - R⁷: has the same meaning including preferred embodiments as R³ defined for formula (I) above but excluding the meaning -(O⁻)(Cat⁺)
   with m equivalents of compounds of formula (V), whereby m is 1 if w is 1 and m is 1 or 2 if w is 2 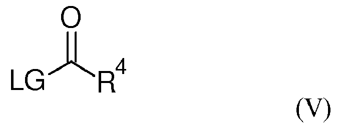 wherein
   R⁴ has the same meaning including preferred embodiments as defined for formula (I) above and
   LG represents a leaving group, preferably chloro, bromo or iodo, C₁-C₈-alkylsulfonyloxy or C₁-C₈-alkoxy, more preferably chloro
   and whereby the reaction with compounds of formula (V) in step a) is preferably carried out either
      - in the presence of at least one Lewis acid as defined below and including preferred embodiments or
      - in the presence of at least one base
   in order to obtain compounds of formula (VI) 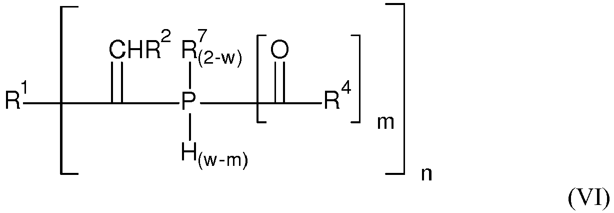
b) oxidizing compounds of formula (IV) to compounds of formula (I).

For step a) suitable bases include all bases which have a higher basicity compared to the phosphine employed and preferably include ammonia, primary, secondary or tertiary amines such as triethylamine, triethanolamine and DBN, N-heteroaromatic compounds such as unsubstituted or substituted pyridines or chinolines, alcoholates such as lithium-, sodium- and potassium- -methoxide, -ethoxide and -tert. butoxide, amides such as lithium-diisoproylamide, hydroxides such as lithium, sodium and potassium hydroxide and carbonates such as lithium, sodium and potassium carbonate.

The amount of base might be in the range of from 0.1 to 100 mol equivalents with respect to the compounds of formula (V), preferably in the range of from 0.5 to 5 mol equivalents, more preferably in the range of from 0.9 to 1.2 mol equivalents and even more preferably in the range of from 1.00 to 1.05 mol equivalents with respect to compounds of formula (V) employed.

The salts formed from the base during the reaction may be remove e.g by sedimentation and decanting, filtration or centrifugation, preferably by filtration id desired or necessary at all.

A typical and preferred reaction pressure range to carry out the process is from 50 hPa to 10 MPa, preferably from 900 hPa to 0,5 MPa as for example under ambient pressure.

The oxidation in step b) may be carried out in any manner known to those skilled in the art and includes reaction with molecular oxygen, hydrogen peroxide, sodium hypochlorite, sodium or potassium percarbonates, monoperoxodisulfate or monopersulfate, peracids such as peracetic acid and 3-chloroperbenzoic acid, hydroperoxides such as tert-butylhydroperoxide, permanganates such as potassium permanganate, chromates or dichromates such as potassium dichromate and aqueous solutions of all of the aforementioned.

Where R³ represents -(O⁻)(Cat⁺) and -(O⁻)(Cat⁺) does not represent -OH the oxidation in step b) is preferably carried out in the presence of the cation Cat⁺.

Steps a) and b) may be performed as a one pot synthesis or in separate steps and either continuously or batch wise.

Preferably steps a) and b) are performed in a solvent. Suitable solvents include
- aromatic hydrocarbons and halogenated aromatic hydrocarbons, such as benzene, toluene, o-,m-and p-xylene, mesitylene, chlorobenzene and dichlorobenzenes,
- aliphatic hydrocarbons such as pentane, hexane, cyclohexane, methylcyclohexane and
- halogenated aliphatic or olefinic hydrocarbons such as methylchloride, dichloromethane, chloroform, trichloroethane and tetrachloromethane
or mixtures of aforementioned solvents.

Where in step a) at least one base is employed or generally for step b) additionally
- ethers such as diethylether, methyl tert.-butyl ether, tetrahydrofurane, dioxane, dimethoxyethane, diethoxyethane and higher glycolethers;
- amides such as dimethylformamide,
- sulfones such as tetraethylensulfone,
- esters such as ethylacetate
or mixtures of aforementioned solvents or with the solvents mentioned above may be employed.

In step b) also water may be employed where R³ represents -(O⁻)(Cat⁺) as a whole represents -OH or Cat⁺ represents 1/p equivalents of a p-valent cation.

The reaction time for each step is typically in the range of from 1 min to 72 hours, preferably 5 min to 24 hours.

The amount of solvent is not critical at all and is just limited by commercial aspects, since they have to be removed if the compounds of formula (I) or the intermediates of formula (VI) shall finally be isolated.

To facilitate the reaction, mixing energy e.g. by standard agitators stirrers and/or static mixing elements is introduced into the reaction mixture.

A typical and preferred reaction temperature range to carry out the process is from -30°C to 120°C, preferably from -10 to 80°C.

It is evident to those skilled in the art, that where the desired reaction temperature is above the boiling point at 1013 hPa of the solvent employed, the reaction is carried out under sufficient pressure. Preparation method A) is particularly suitable to prepare compounds of formulae (II) and (III) as defined above by reacting compounds of formula (VII) 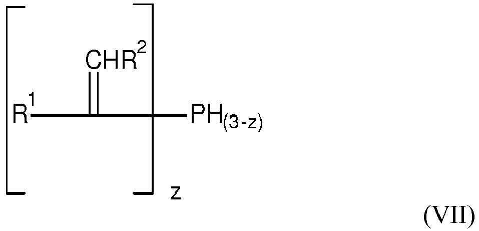 wherein
- z: is 1 or 2 and
- R¹ and R²: have the same meaning including preferred embodiments as defined for formula (I) above and
with m equivalents of compounds of formula (V), 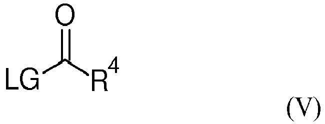 wherein
R⁴ and LG have the same meaning as defined above and
whereby m is 1 or 2 if z is 1 and m is 1 if z is 2
to obtain compounds of formula (VIII) 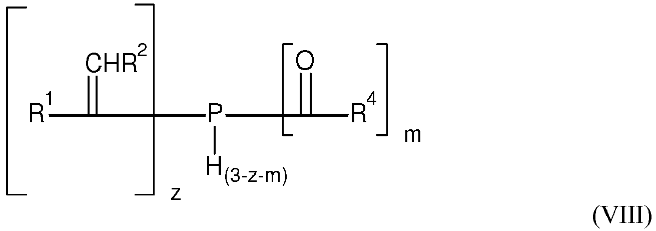 wherein
- z: is 1 or 2 and
- if z is 1: m is 1 or 2 or
- if z is 2: m is 1
- R¹, R² and R³: have the same meaning including preferred embodiments as defined for formula (I) above and
and
b) oxidizing compounds of formula (VIII)
   - if z is 1: to compounds of formula (III), where R³ represents -(O⁻)(Cat⁺) and -(O⁻)(Cat⁺) does not represent -OH preferably in the presence of the cation Cat⁺.
   - if z is 2: to compounds of formula (II).

The compounds of formulae (VI) and (VIII) are novel and as intermediates for the preparation of compounds of formula (I) as well as for those compounds of formulae (II) and (III) also encompassed by the invention.

Specific compounds of formula (VI) include:
Bis(2,4,6-trimethylbenzoyl)-vinyl-phosphine (also referred to as vinyl-bis(mesitoyl)phosphine, bis(2,4,6-trimethylbenzoyl)-(1-phenylethen-1-yl)-phosphine, bis(2,4,6-trimethylbenzoyl)-(3-hexen-3-yl)-phosphine, (2,4,6-trimethylbenzoyl)-vinylphosphine, bis-(benzoyl)-vinyl-phosphine, bis(benzoyl)-(1-phenylethen-1-yl)-phosphine, bis(benzoyl)-(3-hexen-3-yl)-phosphine, (benzoyl)-vinyl-phosphine, 1-phenylethenyl-bis(2,4,6-trimethylbenzoyl)phosphine and 1 -methylethenyl-bis(2,4,6-trimethylbenzoyl)-phosphine.

### Preparation method B

In a another embodiment compounds of formula (I) wherein R³ represents -(O⁻)(Cat⁺) may alternatively be prepared for example by a process comprising the steps of:
aa) reacting compounds of formula (IX) 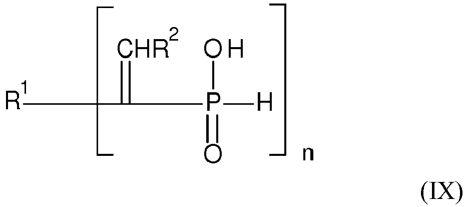 wherein
   n, R¹ and R² have the same meaning including preferred embodiments as defined above
   with compounds (aldehydes) of formula (X), 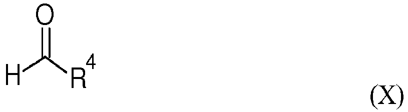 wherein R⁴ has the same meaning including preferred embodiments as defined for formula (I) above
   to obtain compounds of formula (XI) 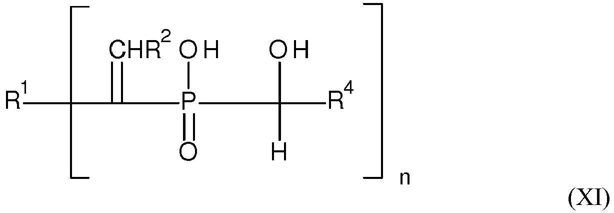 and
bb) oxidizing the alcoholic function of compounds of formula (XI) to compounds of formula (I) wherein R³ represents -(O⁻)(Cat⁺), where -(O⁻)(Cat⁺) as a whole does not represent -OH preferably in the presence of cation Cat⁺.

Step aa) may be performed in water.

To facilitate the reaction, mixing energy e.g. by standard agitators stirrers and/or static mixing elements is introduced into the reaction mixture.

A typical and preferred reaction temperature range to carry out the process according to step aa) is from -30°C to 120°C, preferably from -10 to 80°C.

It is evident to those skilled in the art, that where the desired reaction temperature is above the boiling point at 1013 hPa of the solvent employed, the reaction is carried out under sufficient pressure.

Oxidation of the alcohol functionality in step bb) may be carried out in any manner in principle known to those skilled in the art and includes reaction with N-chlorosuccinimide or elemental chlorine in the presence of dialkylsulfides such as dimethylsulfide and an amine such as triethylamine (the Cory-Kim oxidation).

This type of oxidation is disclosed e.g. in E. J. Corey, C. U. Kim, Journal of the American Chemical Society 1972, 94, 7586-7587 and O. Berger, L. Gavara, J.-L. Montchamp, Organic Letters 2012, 14, 3404-3407).

The oxidation can further be carried out
- via the so called Swern oxidation using oxalyl chloride as oxidant, dimethylsulfoxide as catalyst and an amine as a base as disclosed in K. Omura, D. Swern, Tetrahedron 1978, 34, 1651-1660
- via the so called Pfitzner-Moffatt oxidation using dicyclohexylcarbodiimide as oxidant and dimethylsulfoxide as catalyst as disclosed in K. E. Pfitzner, J. G. Moffatt, Journal of the American Chemical Society 1963, 85, 3027-3027
- using hypervalent iodine-reagents like the Dess-Martin periodinane (see D. B. Dess, J. C. Martin, The Journal of Organic Chemistry 1983, 48, 4155-4156)
- via the so called Ley-Griffith oxidation using *N*-methylmorpholin-*N*-oxide as stoichiometric oxidant and tetrapropylammonium perruthenate (TPAP) as catalyst W. P. Griffith, S. V. Ley, G. P. Whitcombe, A. D. White, Journal of the Chemical Society, Chemical Communications 1987, 1625-1627
- via the so called Oppenauer oxidation using acetone and aluminium alcoholatesas disclosed in R. V. Oppenauer, Recueil des Travaux Chimiques des Pays-Bas 1937, 56, 137-144
- using chromium(VI) compounds such as chromiumtrioxide or pyridinium chlorochromate.

In order to vary the cation for those compounds of formula (I) for which R³ represents -(O⁻)(Cat⁺) in order to prepare other compounds of formula (I) all methods known to those skilled in the art to exchange cations may be employed here as well. These methods include ion exchange e.g. with weakly or strongly acidic ion exchangers, adding salts to utilize different solubility of corresponding salt couples or where -(O⁻)(Cat⁺) as a whole represents -OH simply adding a base comprising the desired cation.

The compounds of formulae (IV), (VII) and (IX) were either unknown so far of commercially not available since their preparation procedures were tedious and thus commercially unattractive.

Therefore, the invention further comprises a process for the preparation of compounds of formulae (XIIa) and (XIIb) 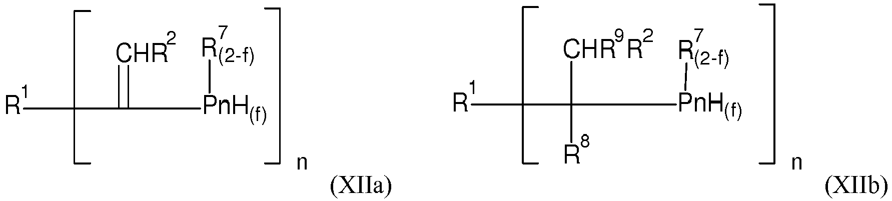 wherein
n, R¹ and R² have the same meaning including preferred embodiments as defined above for formula (I) and R⁷ has the same meaning including preferred embodiments as R³ defined for formula (I) above but excluding the meaning -(O⁻)(Cat⁺)
and
- Pn: is a pnictogen selected from the group consisting of phosphorousarsenic and antimony, preferably phosphorous or arsenic and more preferably phosphorous.
- f: is 0, 1 or 2 and
- R⁸ and R⁹: independently of each other are hydrogen or alkyl
the process comprising the step of
aaa) reacting compounds of
   - formula (XIIIa) (in order to obtain compounds of formula XXIIa) or
   - formula (XIIIb) (in order to obtain compounds of formula XXIIb) or 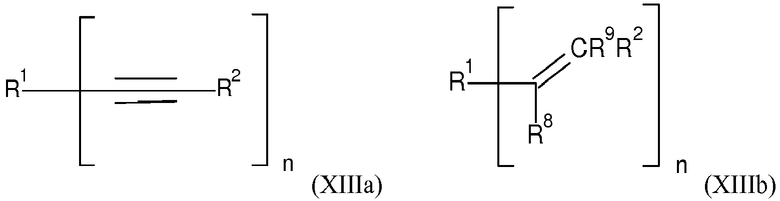 wherein n, R¹ and R² have the same meaning including preferred embodiments as defined above for formula (I) and R⁸ and R⁹ have the same meaning as defined above for formulae (XIIa) and (XIIb)
      with compounds of formula (XIV) 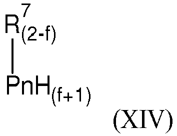 wherein Pn, R⁷ and f have the same meaning mentioned above
      in the presence of at least one, preferably one Lewis acid.

In a preferred embodiment compounds of formula (XIIIa) or (XIIIb) are reacted with phosphine (PH₃),arsine (AsH₃) or stibine (SbH₃), preferably phosphine (PH₃) or arsine (AsH₃) and even more preferably phosphine (PH₃)in the presence of at least one, preferably one Lewis acid.

In a specific embodiment compounds of formula (VII) 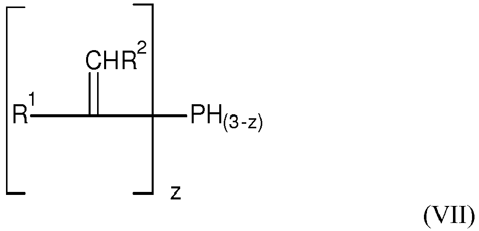 as defined above
are prepared by reacting compounds of formula (XIIIa2) 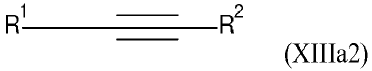 with phosphine (PH₃) in the presence of at least one, preferably one Lewis acid.

The term "in the presence" with regard to at least one Lewis acid shall encompass the fact that the Lewis acid typically forms Lewis adducts the the phosphines employed and at least partially or substantially or completely also with the product phosphines.

Specific compounds of formulae (XIIIa) and (XIIIa2) include acetylene, phenylacetylene, 1,2-diphenylacetylene and 3-hexyne.

Specific compounds of formulae (XIIIb) include ethylene, propylene, isobutene, 1-butene, 2-butene, vinyl-benzene, cyclohexene, 1-hexene, 2-hexene, 3,3-dimethyl-1-buten, cyclopentadiene, styrene, trans-stilbene divinylbenzene, preferably isobutene.Specific compounds of formula (XIIa) include vinylphosphine, divinylphosphine, trivinylphosphine, 1-phenylvinylphosphine, bis-(1-phenylvinyl)phosphine, tris-(1-phenylvinyl)phosphine, 3-hexen-3-ylphosphine and bis(3-hexen-3-yl)phosphine.

Specific compounds of formula (XIIb) include tert.-butyl phosphine, tert.-butyl arsine, tert.-butyl stibine, 1-hexylphosphine, 2-hexylphosphine, 3-hexylphosphine, 3,3-dimethylbutylphosphine, 3,3-dimethylbutan-2-yl phosphine, cyclopentylphosphine, cyclohexylphosphine, 1,2-diphenylethyl phosphine and 1-phenylethylphosphine.

Except for vinylphosphine, divinylphosphine and trivinylphosphine compounds or formula (XIIa) are novel and thus are also encompassed by the invention.

They are not only suitable as precursors of compounds of formulae (I), (IV), (VII) and (IX) but also useful as precursors for other phosphorous or arsenic containing chemicals such as ligands for catalytic conversions, precursor materials for agricultural and pharmaceutical products.

Compounds of formula (XIIb) may serve as starting materials of formula (IV) comprising phosphorous and bearing a substituent R⁷ in preparation of compounds of formula (I) or are desirable compounds applied in the electronic industry.

It is a major finding of the invention that tert.-butyl phosphine and tert.-butyl arsine, in particular tert.-butyl phosphine can be produced with superior purity and selectivity compared to all processes known so far. In particular the products exhibit no detectable impurities such a sulfur which are detrimental for use in the electronic industry.

The process according to the invention to prepare compounds of formulae (XIIa) or (XIIb) is carried out in the presence of at least one, preferably one Lewis acid.

The term "Lewis acid" in the context of the invention is understood to mean the generally customary definition of those compounds which have an electron vacancy, as explained, for example, in Römpp's Chemie-Lexikon, 8th edition, Franck'sche Verlagshandlung 1983, Volume 3, H-L.

In a preferred embodiment the at least one Lewis acid is selected from the group including methyl aluminoxane (MAO) and compounds represented by formula (XV)

MetR^{L}_{(g)}X_{(h-g)} (XV)

wherein
- h: is 2, 3, 4 or 5
- g: is 0 or an integer of at maximum h, preferably 0, 1 or 2, more preferably 0 or 1 and even more preferably 0
- Met: if h is 2 is Sn or in another embodiment Sn, Fe, Mn and Zn
if h is 3 is an element selected from the group consisting of Sc, Y, La, Ce, Pr, Nd, Sm, Eu, Gd, Tb, Dy, Ho, Er, Tm, Yb, Lu, Fe, B, Al, Ga, In, As
if h is 4 is an element selected from the group consisting of V, Ti, Zr, Hf, Sn
if h is 5 is an element selected from the group consisting of V, P, As, Sb, Bi
- X: is independently selected from the group consisting of fluoride, chloride, bromide, iodide, azide, isocyanate, thiocyanate, isothiocyanate or cyanide, preferably fluoro, chloro or bromo, more preferably fluoro or chloro
- R^{L}: represents C₁-C₁₈-alkyl, cyclopentadienyl, C₁-C₁₈-haloalkyl, C₁-C₁₈-alkoxy, C₁-C₁₈-haloalkoxy, C₆-C₁₄-aryl, C₇-C₁₈-arylalkyl, C₆-C₁₄-aryloxy, C₇-C₁₈-arylalkoxy, -O(HC=O), -O(C=O)-(C₁-C₁₈-alkyl), -O(C=O)-(C₆-C₁₄-aryl) and -O(C=O)-(C₇-C₁₈-arylalkyl) or
- two R^{L} together: represent C₄-C₁₈-alkandiyl, C₄-C₁₈-haloalkandiyl, C₄-C₁₈-alkanedioxy, C₄-C₁₈-haloalkanedioxy, C₆-C₁₄-aryldiyl, C₇-C₁₈-arylalkanediyl, C₆-C₁₄-aryldioxy, C₇-C₁₈-arylalkanedioxy, -O(C=O)-(C₁-C₁₈-alkyl)-(C=O)O-, -O(C=O)-(C₆-C₁₄-aryl)-(C=O)O- and -O(C=O)-(C₇-C₁₈-arylalkyl)-(C=O)O-, or oxo (=O)

In one embodiment g is 0.

For this embodiment examples for such compounds include for
- h = 2: tin dichloride or in another embodiment tin dichloride, zinc dichloride, iron dichloride and manganese dichloride
- h = 3: aluminium trichloride, aluminum tribromide, boron trifluoride, boron trichloride, boron tribromide, gallium trichloride, gallium tribromide, gallium triiodide, indium trifluoride, indium tribromide or indium triiodide scandium trichloride, iron trichloride, arsenic trifluoride, bismuth trichloride.
- h = 4: titanium tetrachloride, titanium tetrabromide, vanadium tetrachloride, tin tetrachloride, zirconium tetrachloride, hafnium tetrachloride titanium bromide trichloride, titanium dibromide dichloride, vanadium bromide trichloride, and tin chloride trifluoride.
- h = 5: antimony pentachloride, antimony pentafluoride, arsenic pentafluoride, antimony chloride pentafluoride and arsenic fluoride tetrachloride

Preferred compounds are zinc dichloride, iron dichloride, manganese dichloride, aluminum trichloride and boron trifluoride, whereby aluminum trichloride and boron trifluoride are preferred, and aluminum trichloride is even more preferred.

In one embodiment g is 1, 2 or 3.

For this embodiment examples for such compounds include for
- h = 3: methyl aluminum dibromide, methyl aluminum dichloride, ethyl aluminum dibromide, ethyl aluminum dichloride, butyl aluminum dibromide, butyl aluminum dichloride, dimethyl aluminum bromide, dimethyl aluminum chloride, diethyl aluminum bromide, diethyl aluminum chloride, dibutyl aluminum bromide, dibutyl aluminum chloride, methyl aluminum sesquibromide, methyl aluminum sesquichloride, ethyl aluminum sesquibromide, ethyl aluminum sesquichloride, methoxyaluminum dichloride, ethoxyaluminum dichloride, 2,6-di-tert-butylphenoxyaluminum dichloride, methoxy methylaluminum chloride, 2,6-di-tert-butylphenoxy methylaluminum chloride, isopropoxygallium dichloride and phenoxy methylindium fluoride, acetoxyaluminum dichloride, benzoyloxyaluminum dibromide, benzoyloxygallium difluoride, methyl acetoxyaluminum chloride, and isopropoyloxyindium trichloride, triethyl aluminum and in one embodiment additionally triphenylboron.
- h = 4: cyclopentadienyltitaniumtrichloride, dicyclopentadienyltitaniumdichloride, cyclopentadienylzirconiumtrichloride and dicyclopentadienylzirconiumdichloride
- h = 5: tetraphenylantimony chloride and triphenylantimony dichloride and vanadium oxytrichloride.

In one embodiment two or more Lewis acids are employed for example two or three.

The process is typically and preferably carried out by combining first the compounds of formulae (XIV) and the at least one Lewis acid in a diluent and then adding the desired amount of a compound of formulae (XIIIa) or (XIIIb). In one embodiment the formation of the Lewis adduct formed by reaction compounds of formulae (XIV) and the at least one Lewis acid is assisted my mechanical mixing e.g. over 1 to 120 minutes.

The aforementioned preparation of Lewis adducts comprising the step of combining compounds of formulae (XIV) and the at least one Lewis acid in a diluent is also encompassed by the invention including all preferred embodiments disclosed above for Lewis acids , compounds of formula (IV) and the diluents. Further the use of the Lewis adducts and their solutions for the preparation of compounds of formulae (XIIIa) or (XIIIb) is encompassed by the invention as well.Suitable diluents include and preferably are those which do not or virtually not react under formation of new covalent bonds with the compounds of formulae (XIV), (XIIIa) or (XIIIb) and further do not form a Lewis adduct with the at least one Lewis acid that is more stable than the Lewis adduct typically formed by reaction of compounds of formula (XIV) and the at least one Lewis acid.

Such diluents include
- aromatic hydrocarbons and halogenated aromatic hydrocarbons, such as benzene, toluene, o-,m-and p-xylene, mesitylene, chlorobenzene and dichlorobenzenes,
- aliphatic hydrocarbons such as pentane, hexane, cyclohexane, methylcyclohexane and
- halogenated aliphatic or olefinic hydrocarbons such as methylchloride, dichloromethane, chloroform, trichloroethane and tetrachloromethane
   and mixtures of the aforementioned solvents, whereby
- benzene, toluene, o-,m-and p-xylene and mesitylene are preferred and toluene is particularly preferred.

It is a major finding of this invention that in particular the 1:1 Lewis adducts formed between boron trifluoride, boron trichloride, boron tribromide, boron triiodide, aluminium trichloride, aluminum tribromide, triethyl aluminum, gallium trichloride, gallium tribromide, gallium triiodide, indium trifluoride, indium tribromide,indium triiodide, titanium tetrachloride, titanium tetrabromide and compounds of formula (XIV) in particular the Lewis adduct with phosphine (PH₃) is stable though highly reactive, storable, safe to handle and very soluble, in particular as solution in aromatic hydrocarbons such as benzene, toluene, xylenes and mesitylene and thus is particularly useful to perform the process as described hereinabove. Therefore the above mentioned Lewis adducts and their solutions in aromatic hydrocarbons such as benzene, toluene, xylenes and mesitylene, preferably in toluene are also encompassed by the invention.

A preferred Lewis adduct is the 1:1 Lewis adduct of aluminium trichloride and phosphine (PH₃) and its solution in toluene.

The reaction time of the process in step aaa) is typically in the range of from 2 min to 168 hours, preferably 30 min to 72 hours.

The amount of diluent is not critical at all and is just limited by commercial aspects, since they have to be removed if the compounds of formula (XIIa) or (XIIb) shall finally be isolated.

To facilitate the reaction, mixing energy e.g. by standard agitators stirrers and/or static mixing elements is introduced into the reaction mixture.

Even though not necessary, mixing can also be supported by using high force dispersion devices such as, for example, ultrasound sonotrodes or high pressure homogenizers.

The process may either be performed batch wise or continuously.

A typical and preferred reaction temperature range to carry out the process is from -30°C to 120°C, preferably from -10 to 80°C and even more preferably from 0 to 40°C.

It is evident to those skilled in the art, that where the desired reaction temperature is above the boiling point at 1013 hPa of the diluent employed, the reaction is carried out under sufficient pressure.

A typical and preferred reaction pressure range to carry out the process is from 50 hPa to 10 MPa, preferably from 500 hPa to 1 MPa.

Where phosphine (PH₃) is employed as compound of formula (XIV) the preferred reaction pressure range to carry out the process is from 800 hPa to 10 MPa, preferably from 1000 hPa to 6 MPa, even more preferably from 1000 hPa to 0.5 MPa.

In one embodiment the reaction is carried out under substantial exclusion of oxygen i.e. an oxygen partial pressure of less than 10 hPa, preferably less than 5 hPa and more preferably less than 0.15 hPa.

In one embodiment the reaction is carried out under an inert gas i.e. a gas that does not or virtually not react with the reactants under the reaction conditions employed.

During the reaction compounds of formula (XIIa) or (XIIb) are formed, depending on type of Lewis acid employed or products formed also partially, substantially or completely in form of their Lewis adducts with the at least one Lewis acid employed. These Lewis adducts may either be directly employed in subsequent steps such as those described in preparation method A, or, where isolation, is required or desired decomposed to release compounds of formula (XIIa) or (XIIb) in pure form. Decomposition may be effected e.g. by thermal treatment whereby the compounds of formula (XIIa) or (XIIb) are isolated e.g. by distillation form the Lewis adducts or by addition of water or alcohols such as methanol, ethanol, isopropanol or tert.-butanol to or by addition or organic compounds forming Lewis adducts with the Lewis acid employed which are more stable than those formed with compounds of formula (XIIa) or (XIIb). Such organic compounds include ethers, nitriles and amines.

The molar ratio of compounds of formula (XIIIa) or (XIIIb) to compounds of fomula (XIV) employed in the reaction depends on the number of -[R¹C=CHR²] resp. -[R¹R⁸C-CHR⁹R²] groups to be introduced into the molecule.

It is known to those skilled in the art that depending on the ratio molar ratio and type of compounds of formula (XIIIa) or (XIIIb) and employed in the reaction mixtures of compounds of formula (XIIa) or (XIIb) with a varying number of -[R¹C=CHR²] resp. -[R¹R⁸C-CH R⁹R²] groups may be obtained.

The molar ratio of compounds of formula (III) and Lewis acid employed in the reaction is typically from 0.75 to 1.5 mol of Lewis acid per mol of compound of formula (XIIIa) or (XIIIb), preferably 0.85 to 1.2 mol, even more preferably 0.90 to 1.15 mol.

Where desired compounds of fomula (IX) 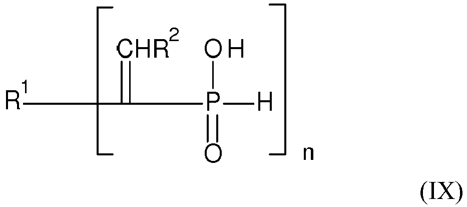 as decribed above may be prepared by the step of
aaaa) oxidizing certain compounds of formula (XIIa) wherein
   - Pn: is phosphorous and
   - f: 2
   namely those of formula (XIIa2) 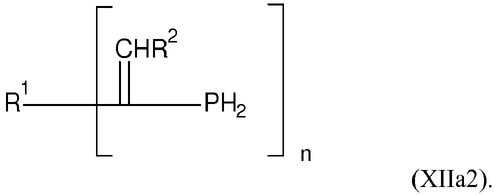
Oxidation in step aaaa) may be carried out as described above for step a) in preparation method A). Therefore, the same reagents and process conditions including preferred embodiments described there shall accordingly apply to this oxidation as well.

Specific examples of compounds of formula (XIIa2) include vinyl-phosphinic acid, hexen 3-yl-phosphinic acid in particular Z-hexen-3-yl-phosphinic acid, bis(1-phenylvinyl)-phosphinic acid and (1-phenylvinyl)phosphinic acid in particular bis-Z-(1-phenylvinyl)-phosphinic acid and Z-(1-phenylvinyl)phosphinic acid.

### Advantages

Compared to those compounds known from prior art, the novel compounds of formula (I), in particular those of formulae (II) and (III) exhibit high reactivity under UV and/ or visible light irradiation and allow crosslinking via their built-in unsaturation directly bound to the phosphorous.

Their preparation can be easily accomplished by the processes according to the invention disclosed above and based on starting materials which are now readily available.

### Applications

For the reasons given above compounds of formula (I) are particularly useful as photo-initiators.

Therefore one further aspect of the invention relates to photo-curable compositions comprising
I) at least one ethylenically unsaturated compound and
II) at least one compound of formula (I) as defined above including preferred embodiments.

Suitable ethylenically unsaturated compounds contain one or more olefinic double bonds and include (meth)acrylic acid esters such as alkyl esters like methyl, ethyl, 2-chloroethyl, N-dimethylaminoethyl, n-butyl, isobutyl, pentyl, hexyl, cyclohexyl, 2-ethylhexyl, octyl, isobornyl esters, phenyl, benzyl and o-, m- and p-hydroxyphenyl esters, hydroxyalkyl esters such as 2-hydroxyethyl, 2-hydroxypropyl, 4-hydroxybutyl, 3,4- dihydroxybutyl or glycerol or [1,2,3-propanetriol] ester, epoxyalkyl esters such as glycidyl, 2,3-epoxybutyl, 3,4-epoxybutyl, 2,3-epoxycyclohexyl, 10,1 1-epoxyundecyl ester, (meth)acrylamides, N-substituted (meth)acrylamides such as N-methylolacrylamide, N- methylolmethacrylamide, N-ethylacrylamide, N-ethylmethacrylamide, N-hexylacryl- amide, N-hexylmethacrylamide, N-cyclohexylacrylamide, N-cyclohexylmethacrylamide, N-hydroxyethylacrylamide, N-phenylacrylamide, N-phenylmethacrylamide, N-benzyl-acrylamide, N-benzylmethacrylamide, N-nitrophenylacrylamide, N-nitrophenylmeth-acrylamide, N-ethyl-N-phenylacrylamide, N-ethyl-N-phenylmethacrylamide, N-(4-hydroxyphenyl)acrylamide and N-(4-hydroxyphenyl)methacrylamide, IBMAA (N-isobutoxymethylacrylamide), (meth)acrylonitriles, unsaturated acid anhydrides such as itaconic anhydride, maleic anhydride, 2,3-dimethylmaleic anhydride, 2-chloromaleic anhydride, unsaturated esters such as maleic acid esters, phthalic acid esters, itaconic acid esters, methylenesuccinic acid esters, styrenes such as methylstyrene, o-, m- or p-chloromethylstyrene and o-, m- and p-hydroxystyrene, divinylbenzene, vinyl ethers such as iso-butyl vinyl ether, ethyl vinyl ether, 2-chloroethyl vinyl ether, hydroxyethyl vinyl ether, propyl vinyl ether, butyl vinyl ether, isobutyl vinyl ether, octyl vinyl ether and phenyl vinyl ether, vinyl and allyl esters such as vinyl acetate, vinyl acrylate, vinyl chloroacetate, vinyl butyrate and vinyl benzoate, divinyl succinate, diallyl phthalate, triallyl phosphate, vinyl chloride and vinylidene chloride, isocyanurates such as triallyl isocyanurate and tris(2-acryloylethyl) isocyanurate, N-vinyl-heterocyclic compounds such as N- vinylpyrrolidones or substituted N-vinylpyrrolidones, N-vinylcaprolactam or substituted N-vinylcaprolactams, N-vinylcarbazole, N-vinylpyridine.

Further examples include diacrylate esters such as 1,6-hexanediol diacrylate (HDDA), ethylene glycol diacrylate, propylene glycol diacrylate, dipropylene glycol diacrylate, tripropylene glycol diacrylate, neopentyl glycol diacrylate, hexamethylene glycol diacrylate and bisphenol A diacrylate, trimethylolpropane triacrylate, trimethylolethane triacrylate, trimethylolpropane trimethacrylate, trimethylolethane trimethacrylate, tetramethylene glycol dimethacrylate, triethylene glycol dimethacrylate, tetraethylene glycol diacrylate, pentaerythritol diacry- late, pentaerythritol triacrylate, pentaerythritol tetraacrylate, dipentaerythritol diacrylate, dipentaerythritol triacrylate, dipentaerythritol tetraacrylate, dipentaerythritol pentaacry- late, dipentaerythritol hexaacrylate, tripentaerythritol octaacrylate, pentaerythritol dimethacrylate, pentaerythritol trimethacrylate, dipentaerythritol dimethacrylate, dipentaerythritol tetramethacrylate, tripentaerythritol octamethacrylate, pentaerythritol diitaconate, dipentaerythritol trisitaconate, dipentaerythritol pentaitaconate, dipentaerythritol hexaitaconate, ethylene glycol diacrylate, 1,3-butanediol diacrylate, 1,3- butanediol dimethacrylate, 1,4-butanediol diitaconate, sorbitol triacrylate, sorbitol tetraacrylate, pentaerythritol-modified triacrylate, sorbitol tetramethacrylate, sorbitol pentaacrylate, sorbitol hexaacrylate, oligoester acrylates and methacrylates, glycerol di- and tri-acrylate, 1,4-cyclohexane diacrylate, bisacrylates and bismethacrylates of polyethylene glycol having molecular weights of from 200 to 2,500, alkoxylated alcohols such glycerol ethoxylate triacrylate, glycerol propoxylate triacrylate, trimethylolpropane ethoxylate triacrylate, trimethylolpropane propoxylate triacrylate, pentaerythritol ethoxylate tetraacrylate, pentaerythritol propoxylate triacrylate, pentaerythritol propoxylate tetraacrylate, neopentyl glycol ethoxylate diacrylate, neopentyl glycol propoxylate diacrylate, unsaturated carboxylic acids such as acrylic acid, methacrylic acid, crotonic acid, cinnamic acid, maleic acid, fumaric acid, itaconic acid, unsaturated fatty acids such as linolenic acid or oleic acid

Further examples for higher-molecular-weight ethylenically unsaturated compounds include esters of ethylenically unsaturated mono- or poly-functional carboxylic acids and polyols or polyepoxides, and polymers having ethylenically unsaturated groups in the main chain or in or as side groups such as, for example, unsaturated polyesters, polyamides and polyurethanes and copolymers thereof, alkyd resins, polybutadiene and butadiene copolymers, polyisoprene and isoprene copolymers, polymers and copolymers having (meth)acrylic groups in side chains, and also mixtures of one or more of such polymers.

Further suitable ethylenically unsaturated compounds include include acrylates which have been modified by reaction with primary or secondary amines, as described, for example, in US3844916, in EP280222, in US5482649 or in US5734002. Such amine-modified acrylates are also termed amine acrylates. Amine acrylates are obtainable, for example, under the name EBECRYL 80, EBECRYL 81 , EBECRYL 83, EBECRYL 7100 from UCB Chemicals, under the name Laromer PO 83F, Laromer PO 84F, Laromer PO 94F from BASF SE, under the name PHOTOMER 4775 F, PHOTOMER 4967 F from Cognis or under the name CN501 , CN503, CN550 from Cray Valley and GENOMER 5275 from Rahn.

Where water is present the at least one ethylenically unsaturated compound may be dissolved or emulsified in water.

In such compositions the concentration of water is for example from 5 to 80 % by weight, preferably from 30 to 60 % by weight.

Further components which may be additionally present in the photo-curable compositions or not are:
- water
- organic polar diluents or solvents such as ethers like ethylenglycol dimethylether and polyethyleneglycol ethers
- organic or inorganic pigments
- UV-adsorbers
- inorganic fillers
- thermostabilizers
- isocyanates and/or polyisocyanates
- flattening agents
- matting agents,
- defoamer
- anti-friction agents such as silicon containing antifriction agents,
- surfactants
- resins such as formaldehyde resins, polyurethan resins, polyacrylates, cellulosic resins and sucrose benzoate
- further photoinitiators, including but not limited to Norrish Type I initiators such as 2-hydroxy-1-{4-[4-(2-hydroxy-2-methyl-propionyl)-benzyl]-phenyl}-2-methyl-propan-1-one (Irgacure 127), 2-hydroxy-1-[4-(2-hydroxyethoxy)-phenyl]-phenyl]-2-methylpropan-1-one (Irgacure 2959), 1-hydroxy-cyclohexyl-phenyl-ketone (Irgacure 184), 2-hydroxy-2-methyl-1-phenyl-1-propanone (Irgacure 1173), benzildimethylketal and oligo [2-hydroxy-2-methyl-1 - [4-(1 - methylvinyl)phenyl]propanone] (Esacure KIP 150 from Lamberti) as well as mono- or bisacylphosphinoxides.

The amounts of ethylenically unsaturated components, compounds of formula (I), and optional other ingredients will vary according to the type of composition, the particular equipment to be used to apply it and the application.

However, typically, the amount of photo-initiator within the composition is in the range of from 0.05 to 12 wt.-%, preferably 2 to 10 wt.-%, more preferably 4 to 9 wt.-%.

The invention further relates to a process for preparing a cured composition by exposing the photo-curable compositions according to the present invention to electromagnetic radiation, preferably ultraviolet or blue-light radiation.

Suitable sources of electromagnetic radiation include UV lamps like low-pressure, medium-pressure, high-pressure and super-high-pressure mercury lamps which can be undoped or doped e.g. with gallium iodide, thallium iodide or other metal halides; green, blue, violet-blue LEDs or UV-LEDs; LED lamps, concentrated, direct or indirect sunlight; xenon or xenon mercury arc lamps such as continuous-output xenon short- or long-arc lamps, flash lamps such as xenon or xenon mercury flash lamps; microwave-excited metal vapour lamps; excimer lamps, superactinic fluorescent tubes; fluorescent lamps; and noble gas incandescent lamps.

Preferred sources are lamps like low-pressure, medium-pressure, high-pressure and super-high-pressure mercury lamps which can be undoped or doped e.g. with gallium iodide, thallium iodide or other metal halides; green, blue, violet-blue or UV-LEDs, xenon or xenon mercury arc lamps such as continuous-output xenon short- or long-arc lamps.

The compositions according to the invention can be used for various purposes, for example in overprint coatings, as printing ink, e.g. screen printing ink, ink for offset- or flexo printing, inkjet ink, ink for sheet-fed printing, electrophotography ink, intaglio ink, as clearcoats, white coats or colour-pigmented coats, e.g. for wood or metal, as powder coatings, as paints, inter alia for paper, wood, metal or plastics, as daylight-curable paints for marking structures and roads, paints for buildings, constructions, vehicles, aircraft, etc., for photographic reproduction processes, for holographic recording materials, for image-recording processes or in the production of printing plates that can be developed using organic solvents or using aqueous-alkaline media, for the production of masks for screen printing, as dental filling compounds, as adhesives, as pressure-sensitive adhesives, as laminating resins, as etch resists or permanent resists, both liquid and dry films, as photostructurable dielectrics, and as solder masks for electronic circuits, as resists in the production of colour filters for any type of display screen or in the creation of structures during the manufacture of plasma displays and electroluminescent displays, in the production of optical switches, optical gratings (interference gratings), in the manufacture of three-dimensional articles by curing in the mass (photo-curing in transparent moulds) or according to the stereolithography process, in the manufacture of composite materials, in the coating or sealing of electronic components or as coatings for optical fibres. The compositions are also suitable for the production of optical lenses, e.g. contact lenses or Fresnel lenses, and also in the manufacture of medical apparatus, aids or implants. The compositions can also be used for the preparation of gels having thermotropic properties.

The compounds of formula (I) are also suitable for use in photo-curable adhesives; e.g. in the preparation of pressure-sensitive adhesives, laminating adhesives, hot-melt adhesives, moisture-cure adhesives, silane reactive adhesives or silane reactive sealants and the like, and related applications. Said adhesives can be hot melt adhesives as well waterborne or solvent borne adhesives, liquid solventless adhesives or 2-part reactive adhesives.

The compounds of formula (I) may also be used as free-radical photoinitiators or photoinitiating systems for radiation-curable powder coatings.

As mentioned above, curing according to the invention can be carried out by irradiation with electromagnetic radiation. Depending on the composition of the formulation to be cured, however, thermal curing before, during or after the irradiation may be advantageous.

Thermal curing is carried out by methods known to the person skilled in the art. In general, the curing is carried out in an oven, e.g. a circulating air oven, on a heating plate or by irradiation with IR lamps. Unassisted curing at room temperature is also possible, depending on the binder system used. The curing temperatures are generally between room temperature and 150°C, for example from 25 to 150°C or from 50 to 150°C. In the case of powder coatings or coil coatings, the curing temperatures may be even higher, e.g. up to 350°C.

The invention is hereinafter further explained by the examples without being limited thereto.

### Examples:

### Example 1): Synthesis of the Cl₃Al-PH₃ adduct and other Lewis acid-PH₃ adducts in solution

In a 500 mL round bottom flask with a gas in- and outlet, AlCl₃ (99.998 % from AlfaAesar, 50.0 g, 375 mmol) was suspended in toluene (approximately 250 mL). The flask was exposed to a pressure of PH₃ until the pressure gauge read 1800 hPa under vigorous stirring. Upon formation of the Cl₃Al-PH₃ adduct, the pressure drops and eventually the procedure has to be repeated until a clear solution is obtained and no AlCl₃ remains undissolved in the vessel. The reaction mixture was stirred for another 30 min under PH₃ and then purged to the quenching system. To remove excess PH₃ from the solution, the flask was flushed with argon for 15 min under vigorous stirring. Toluene was added to the flask to obtain a total volume of 375 mL and thus, a 1.0 M stock solution of the Cl₃Al-PH₃ adduct.
**³¹P-NMR** (101 MHz, toluene): δ = -168.7 (q, ¹*J*_{PH} = 374.5 Hz) ppm.

The Lewis adducts of PH₃ with boron trichloride, boron tribromide, boron triiodide, aluminium trichloride, aluminum tribromide, triethyl aluminum, gallium trichloride, gallium tribromide, gallium triiodide, indium triiodide, titanium tetrachloride, titanium tetrabromide were prepared following the strictly analogous procedure described above.
Cl₃B-PH₃: **³¹P-NMR** (101 MHz, toluene): δ = -110.2 (q, ¹*J*_{PH} = 421 Hz) ppm.
Br₃B-PH₃: **³¹P-NMR** (101 MHz, toluene): δ = -101.4 (q, ¹*J*_{PH} = 431 Hz) ppm.
I₃B-PH₃: **³¹P-NMR** (101 MHz, toluene): δ = -92.0 (q, ¹*J*_{PH} = 429 Hz) ppm.
Br₃Al-PH₃: **³¹P-NMR** (101 MHz, toluene): δ = -164.4 (q, ¹*J*_{PH} = 372 Hz) ppm.
Et₃Al-PH₃: **³¹P-NMR** (101 MHz, toluene): δ = - 214.0 (q, ¹*J*_{PH} = 249 Hz) ppm.
Cl₃Ga-PH₃: **³¹P-NMR** (101 MHz, toluene): δ = - 156.2 (q, ¹*J*_{PH} = 390 Hz) ppm.
Br₃Ga-PH₃: **³¹P-NMR** (101 MHz, toluene): δ = -160.2 (q, ¹*J*_{PH} = 375 Hz) ppm.
I₃Ga-PH₃: **³¹P-NMR** (101 MHz, toluene): δ = -165.5 (q, ¹*J*_{PH} = 365 Hz) ppm.
I₃In-PH₃: **³¹P-NMR** (101 MHz, toluene): δ = - 190.9 (q, ¹*J*_{PH} = 332 Hz) ppm.
Br₃Ti-PH₃: **³¹P-NMR** (101 MHz, toluene): δ = -219.1 (q, ¹*J*_{PH} = 218 Hz) ppm.

### Example 2): Isolation Cl₃Al-PH₃ adduct

In a 20 mL Schlenk tube AlCl₃ (6.67 g, 50 mmol) was suspended in toluene (7.5 mL) and the reaction carried out as described in example 1. Subsequently, the suspension was filtered through a Teflon cannula and the filtrate cooled to -30 °C. The colorless, crystalline solid was collected on a glass frit and dried in a stream of argon to give the Cl₃Al-PH₃ adduct as a white powder.

### Example 3): Preparation of vinylphosphine

To a stirred solution of the Cl₃Al-PH₃ adduct prepared according to example 1) under an inert gas atmosphere in toluene (0.5 M) acetylene gas was added at 0 °C until the pressure gauge read 1500 hPa (i.e. a 500 hPa overpressure of acetylene was added). After 15min, the clear solution had transformed to a white suspension. After 1 h, the acetylene pressure was released and the reaction mixture hydrolyzed by slow addition of water (5 mL, degassed with N₂) at 0 °C. The reaction mixture was stirred for 1 h at 20 °C, the organic phase separated and the aqueous phase extracted with toluene (3x 5 mL).
**³¹P-NMR** (101 MHz, toluene): δ = -136.4 (tdt, ¹*J*_{PH} = 198.0 Hz, ³*J*_{PH, trans} = 28.2 Hz, *J*_{PH} = 13.9 Hz).

### Example 4): Preparation of divinylphosphine

A stirred solution of the Cl₃Al-PH₃ adduct prepared according to example 1) in toluene (0.5 M) was exposed to a 0.5 bar overpressure of acetylene at 20 °C. After 15min, the clear solution had transformed to a white suspension. After 24 h a pale yellow, cloudy suspension was obtained, the acetylene pressure was released and the reaction mixture hydrolyzed by slow addition of water (5 mL, degassed with N₂) at 0 °C. The ³¹P-NMR spectrum showed weak signals belonging to the mono- (15 %) and divinylphosphine (85 %), besides amounts of an insoluble white polymer.
**³¹P-NMR** (101 MHz, toluene): δ = -63.6 (dttt, ¹*J*_{PH} = 211.4 Hz, ³*J*_{PH, trans} = 28.7 Hz, ³*J*_{PH}, _{cis} = 14.1 Hz, ²*J*_{PH} = 13.7 Hz) ppm.

### Example 5): Preparation of vinylphosphinic acid

To a stirred toluene solution of vinylphosphine prepared according to example 3 (2.5 mmol) in toluene and an acetate buffer (pH = 7, 5 mL) was added peracetic acid (1.4 mL, 35 w-%, 6.3 mmol, 1.25 eq.) over 30 min at 0 °C. ³¹P-NMR spectroscopy revealed full conversion. Similar product concentrations were found in the organic as well as in the aqueous phase.
**³¹P-NMR** (101 MHz, toluene): δ = 23.0 (ddt, ¹*J*_{PH} = 563.3 Hz, *J*_{PH, trans} = 49.8 Hz, ³*J*_{PH} = 26.4 Hz).

### Example 6): Preparation of vinyl-bis(2,4,6-trimethylbenzoyl)phosphine

In a 50 mL Schlenk tube, AlCl₃ (1.47 g, 11.0 mmol, 1.1 eq.) was suspended in toluene (20 mL). It was converted into the Cl₃Al-PH₃ adduct as described above in example 1. Subsequently, the Schlenk tube was pressurized with 0.5 bar acetylene under vigorous stirring for 2 h at 0 °C. Full conversion of the Cl₃Al-PH₃ adduct was confirmed by ³¹P-NMR spectroscopy. To the stirring solution, 2,4,6-trimethylbenzoyl chloride (mesitoyl chloride) (3.32 mL, 20.0 mmol, 1.0 eq.) was added over 5 min and the resulting orange suspension stirred for 24 h at 20 °C. The solution was removed from the orange suspension with a Teflon cannula equipped with a glass fiber filter and the solid washed with toluene (3x 5 mL). Single crystals of the aluminum complex AlCl₂[vinyl-bis(2,4,6-trimethylbenzoyl)phosphine]₂][AlCl₄] were obtained by gas-phase diffusion of *n*-hexane into a dichlorobenzene solution.

The light yellow solid was suspended in toluene (15 mL) and hydrolyzed by addition of water (5 mL, degassed with N₂). The organic phase was isolated and the aqueous phase extracted with toluene (3x 3 mL). The combined organic phases were filtered through a syringe filter and the solvent removed under reduced pressure. The resulting yellow solid was recrystallized from refluxing methanol to yield vinyl-bis(2,4,6-trimethylbenzoyl)phosphine as a yellow, crystalline solid (2.60 g, 7.38 mmol, 74 %).
**¹H-NMR** (300 MHz, C₆D₆): δ = 6.69-6.57 (m, 1H, P-C*H*), 6.56 (s, 4H, Mes-*H*), 5.63-5.43 (m, 2H, CH=C*H*₂), 2.25 (s, 12H, o-Mes-C*H*₃), 2.01 (s, 6H, p-Mes-C*H*₃) ppm.
**¹³C{¹H}-NMR** (75 MHz, C₆D₆): δ = 216.1 (d, ¹*J*_{PC} = 43.9 Hz, *C*=O), 139.5 (d, ³*J*_{PC} = 28.0 Hz, *o*-*Mes*), 139.3 (s, *p*-*Mes*), 134.7 (d, ²*J*_{PC} = 29.5 Hz, CH=*C*H₂), 133.8 (s, ipso-*Mes*), 129.1 (s, m-*Mes*), 127.4 (d, ¹*J*_{PC} = 7.8 Hz, *C*H=CH₂), 21.1 (s, p-*C*H₃), 20.1 (d, ⁴*J*_{PC} = 5.4 Hz, o-*C*H₃) ppm.
**³¹P-NMR** (121 MHz, C₆D₆): δ = 42.9 (dd, *³J*_{PH, trans} = 39.7 Hz, ³ *J*_{PH, cis} = 15.7 Hz) ppm.
**Analysis** Found C, 74.7; H, 7.2; N, 0.1. Calc. for C₂₂H₂₅O₂P: C, 75.0; H, 7.2; N, 0.
**Mp** 82-86 °C (from methanol).

### Example 7): Preparation of vinyl-bis(2,4,6-trimethylbenzoyl)phosphine oxide

To a stirred solution of vinyl-bis(2,4,6-trimethylbenzoyl)phosphine prepared according to example 6 (4.23 g, 12.0 mmol, 1.0 eq.) in toluene (10 mL) was added peracetic acid (2.9 mL, 35 w-%, 15 mmol, 1.25 eq.) in the dark over 15 min at 0 °C. The pale yellow solution was stirred for 30 min at 20 °C. The aqueous phase was separated and discarded. The organic phase was washed with saturated aqueous Na₂CO₃ (3x 10 mL), dried over MgSO₄ and the solvent removed under reduced pressure. The residue was recrystallized from refluxing toluene (15 mL) to yield vinyl-bis(2,4,6-trimethylbenzoyl)phosphine oxide as a pale yellow solid (3.35 g, 9.10 mmol, 76 %).
**¹H-NMR** (300 MHz, CDCl₃): δ = 6.86 (s, 4H, Mes-*H*), 6.58-6.29 (m, 3H, C*H*=C*H*₂)*,* 2.28 (s, 18H, Mes-C*H*₃) ppm.
**¹³C{¹H}-NMR** (75 MHz, CDCl₃): δ = 215.9 (d, ¹*J*_{PC} = 61.7 Hz *C*=O), 141.3 (s, p-*Mes*), 138.5 (s, CH=*C*H₂), 136.0 (d, ²*J*_{PC} = 42.0 Hz, ipso-*Mes*), 135.6 (s, o-*Mes*), 129.2 (s, m-*Mes*), 126.6 (d, ¹*J*_{PC} = 74.4 Hz, *C*H=CH₂), 21.4 (s, p-*C*H₃), 19.9 (s, o-*C*H₃) ppm.
**³¹P-NMR** (121 MHz, C₆D₆): δ = 9.7 (ddd, ³*J*_{PH, trans} = 39.7 Hz, *J*_{PH} = 27.9 Hz, *J*_{PH} = 23.3 Hz) ppm.
**Analysis** Found C, 71.4; H, 6.7; N, 0.1. Calc. for C₂₂H₂₅O₃P: C, 71.7; H, 6.8; N, 0.
**Mp** 158-160 °C (decomposition, from toluene).

### Example 8): Preparation of 1-phenylethenyl-bis(2,4,6-trimethylbenzoyl)phosphine and 1-methylethenyl-bis(2,4,6-trimethylbenzoyl)phosphine and the corresponding phosphine oxides 1-phenylethenyl-bis(2,4,6-trimethylbenzoyl)phosphine oxide and 1-methylethenyl-bis(2,4,6-trimethylbenzoyl)phosphine oxide.

To a stirred solution of the Cl₃Al-PH₃ adduct prepared according to example 1) in toluene (10.0 mL, 1 M, 10 mmol, 1.0 eq.) was added phenylacetylene (1.2 mL, 11 mmol, 1.1 eq.) at 0 °C. The resulting suspension was stirred for 4 h at 20 °C. Subsequently, triethylamine (4.2 mL, 30 mmol, 1.5 eq.) and 2,4,6-trimethylbenzoyl chloride (3.32 mL, 20.0 mmol, 1.0 eq.) were added and the resulting orange suspension stirred for 10 h at 80 °C. The suspension was filtered and the volatiles removed from the filtrate under reduced pressure to give 1-phenylethenyl-bis(2,4,6-trimethylbenzoyl)phosphine as a yellow solid.
**³¹P{¹H}-NMR** (121 MHz, toluene): δ = 59.6 ppm.

Methylethenyl-bis(2,4,6-trimethylbenzoyl)phosphine was prepared in a strictly analogous manner by pressurizing a flask containing the Cl₃Al-PH₃ adduct with propyne.
**³¹P{¹H}-NMR** (121 MHz, toluene): δ = 68.3 ppm.

Oxidation of both phosphines to their corresponding phosphine oxides was carried out in strict analogy to example 7).

1-phenylethenyl-bis(2,4,6-trimethylbenzoyl)phosphine oxide:
**³¹P{¹H}-NMR** (121 MHz, toluene): δ = 10.0 ppm.

1-methylethenyl-bis(2,4,6-trimethylbenzoyl)phosphine
**³¹P{¹H}-NMR** (121 MHz, toluene): δ = 11.1 ppm.

### Example 9): Preparation of (1-phenylvinyl)phosphinic acid and bis(1-phenylvinyl)-phosphinic acid via (1-phenylvinyl)phosphine and bis(1-phenylvinyl)phosphine

To a stirred solution of the Cl₃Al-PH₃ adduct prepared according to example 1) in toluene (25.0 mL, 1 M, 25 mmol, 1.25 eq.) was added a solution of phenylacetylene (2.15 mL, 20 mmol, 1.0 eq.) in toluene (15 mL) at 0 °C over 30 min. The pale orange emulsion was stirred for 18 h at 20 °C and hydrolyzed with water (degassed with N₂, 5 mL). Integration of the signals in the ³¹P-NMR spectrum revealed a product distribution of 85 % (1-phenylvinyl)phosphine to 15 % bis(1-phenylvinyl)phosphine. To the mixture was added H₂O₂ (5.1 mL, 30 w-%, 50 mmol, 1.25 eq.) at 0 °C and the mixture stirred for 6 h at 20 °C. The organic phase was isolated and the aqueous phase extracted with toluene (3x 5 mL). The combined organic phases were dried over MgSO₄ and the solvent removed under reduced pressure, to yield the phosphinic acids as a pale yellow oil (2.09 g, > 75 %).

Note: The analytical data given below does not include the ¹H- and ¹³C-NMR signals of the aromatic regions of the phosphinic acids due to overlapping signals.

### (1-Phenylvinyl)phosphine:

**³¹P-NMR** (121 MHz, toluene): δ = -122.2 (tdd, ¹*J*_{PH} = 198.9 Hz, ³*J*_{PH, trans} = 25.9 Hz, ³*J*_{PH, cis} = 11.9 Hz) ppm.

### Bis(1-phenylvinyl)phosphine:

**³¹P-NMR** (121 MHz, toluene): δ = -37.3 (dtt, ¹*J*_{PH} = 218.4 Hz, ³*J*_{PH, trans} = 23.4 Hz, ³*J*_{PH, cis} = 10.3 Hz) ppm.

### (1-Phenylvinyl)phosphinic acid:

**¹H-NMR** (300 MHz, CDCl₃): δ = 12.48 (br. d, ²*J*_{PH} = 25.6 Hz, 1H, OH), 7.32 (d, ¹*J*_{PH} = 571.4 Hz, 1H, P*H*), 6.18 (d, ³*J*_{PH} = 46.3 Hz, 1H, *trans*-C*H₂*), 6.16 (d, ³*J*_{PH} = 24.5 Hz, 1H, *cis-*C*H*₂) ppm.
**¹³C{¹H}-NMR** (75 MHz, CDCl₃): δ = 135.3 (d, ¹*J*_{PC} = 12.6 Hz, PC), 129.5 (d, ²*J*_{PC} = 12.8 Hz, *C*H₂) ppm.
**³¹P-NMR** (121 MHz, CDCl₃): δ = 25.8 (ddd, ¹*J*_{PH} = 571.4 Hz, ³*J*_{PH, trans} = 46.3 Hz, ³*J*_{PH, cis} = 24.5 Hz) ppm.

### Bis(1-phenylvinyl)phosphinic acid:

**¹H-NMR** (300 MHz, CDCl₃): δ = 12.48 (br. d, ²*J*_{PH} = 25.6 Hz, 1H, OH), 6.26 (dd, ³*J*_{PH} = 20.1 Hz, ²*J*_{HH} = 1.2 Hz, 1H, *cis-*C*H*₂), 5.99 (dd, ³*J*_{PH} = 40.6 Hz, ²*J*_{HH} = 1.4 Hz, 1H, *trans-C*H₂) ppm.
**¹³C{¹H}-NMR** (75 MHz, CDCl₃): δ = 136.7 (d, ¹*J*_{PC} = 13.2 Hz, PC), 131.8 (d, ²*J*_{PC} = 7.6 Hz, *C*H₂) ppm.
**³¹P-NMR** (121 MHz, CDCl₃): δ = 30.4 (tt, ³*J*_{PH, trans} = 40.4 Hz, ³ *J*_{PH, cis} = 19.9 Hz) ppm.

### Example 10): Preparation of tris(1-phenylvinyl)phosphine

To a stirred solution of the Cl₃Al-PH₃ adduct prepared according to example 1) in toluene (10.0 mL, 1 M, 10 mmol, 1.0 eq.) was added phenylacetylene (3.55 mL, 33 mmol, 3.3 eq.) over 5 min at 0 °C. The yellow emulsion was stirred for 24 h at 20 °C and for 3 h at 60 °C. It was hydrolyzed with water (degassed with N₂, 3 mL) and stirred for 30 min at 20 °C. The organic phase was isolated and the aqueous phase extracted with toluene (3x 3 mL). The combined organic phases were filtered through a syringe filter and the solvent removed under reduced pressure. The pale yellow solid was recrystallized from refluxing MeOH (approx. 50 mL), to yield the phosphine as a pale yellow, crystalline solid (2.62 g, 7.70 mmol, 77 %). Single crystals suitable for X-ray diffraction were obtained from refluxing MeOH.
**¹H-NMR** (300 MHz, C₆D₆): δ = 7.72-7.62 (m, 6H, o-Ph-*H*), 7.15-7.07 (m, 6H, m-Ph-*H*), 7.07-7.00 (m, 3H, p-Ph-*H*), 5.89 (dd, ³*J*_{PH} = 12.7 Hz, ²*J*_{HH} = 1.5 Hz, 3H, trans-C*H*), 5.58 (dd, ³*J*_{PH} = 5.6 Hz, ²*J*_{HH} = 1.5 Hz, 3H, cis-CH) ppm.
**¹³C{¹H}-NMR** (75 MHz, C₆D₆): δ = 145.7 (d, ²*J*_{PC} = 15.9 Hz, ipso-*Ph*), 142.1 (d, ¹*J*_{PC} = 23.5 Hz, P-*C*), 128.7 (d, ⁴*J*_{PC} = 1.0 Hz, m-*Ph*), 128.1 (d, ⁵*J*_{PC} = 1.7 Hz, p-*Ph*), 127.2 (d, ³*J*_{PC} = 11.8 Hz, o-*Ph*), 126.2 (d, ²*J*_{PC} = 3.2 Hz, *C*H₂) ppm.
**³¹P-NMR** (121 MHz, C₆D₆): δ = -3.1 (dd, ³*J*_{PH, trans} = 12.7 Hz, ³*J*_{PH, cis} = 5.6 Hz) ppm.
**Analysis** Found C, 84.7; H, 6.3; N, 0.1. Calc. for C₂₄H₂₁P: C, 84.7; H, 6.2; N, 0.
**Mp** 75-78 °C (from methanol).

### Example 11): Preparation of (Z)-(1,2-diphenylvinyl)phosphine

A solution of diphenylacetylene (3.21 g, 18 mmol, 1 eq.) in toluene (20 mL) was added to a solution of Cl₃Al-PH₃ prepared according to example 1) in toluene (20.0 mL, 1 M, 20 mmol, 1.1 eq.) over 30 min under vigorous stirring at 20 °C and the resulting pale white suspension stirred for 3.5 h at 20 °C. The aluminum complexes were hydrolyzed by addition of a phosphate buffer (pH = 7, 0.1 M, 5 mL) at 0 °C. After stirring the reaction mixture for 30 min at 20 °C, the organic phase was isolated and volatiles removed under reduced pressure, yielding a pale yellow solid. Integration of the signals in the ³¹P-NMR spectrum revealed a mixture of 95 % of the primary phosphine (Z)-(1,2-diphenylvinyl)phosphine and 5 % of the secondary phosphine Bis((Z)-(1,2-diphenylvinyl))phosphine. Recrystallization from refluxing methanol yields pure (Z)-(1,2-diphenylvinyl)phosphine as a white, crystalline solid (2.50 g, 11.8 mmol, 65 %). Single crystals suitable for X-ray diffraction were obtained from refluxing methanol.
**¹H-NMR** (300 MHz, C₆D₆): δ = 7.46-7.37 (m, 4H, Ph-*H*), 7.26-7.01 (m, 7H, Ph-H and C=C*H*), 3.82 (dd, ¹*J*_{PH} = 206.8 Hz, ⁴*J*_{HH} = 1.4 Hz, 2H, P*H*) ppm.
**¹³C{¹H}-NMR** (75 MHz, C₆D₆): δ = 146.1 (d, *J*_{PC} = 5.1 Hz, C), 138.9 (d, ²*J*_{PC} = 12.7 Hz, PCCH), 138.7 (s, C), 134.4 (d, ¹*J*_{PC} = 20.1 Hz, PC), 132.0 (s, CH), 129.5 (d, *J*_{PC} = 6.0 Hz, CH), 128.6 (d, *J*_{PC} = 15.2 Hz, CH), 127.6 (d, *J*_{PC} = 5.5 Hz, CH), 127.3 (d, *J*_{PC} = 3.6 Hz, CH) ppm.
**³¹P-NMR** (121 MHz, C₆D₆): δ = -133.7 (td, ¹*J*_{PH} = 206.7 Hz, ³*J*_{PH} = 13.7 Hz) ppm.
**Analysis** Found C, 79.5; H, 6.2; N, 0.1. Calc. for C₁₄H₁₃P: C, 79.2; H, 6.2; N, 0.
**Mp** 49-51 °C (from methanol).

### Example 12): Preparation of bis((Z)-(1,2-diphenylvinyl))phosphine

To a flask containing diphenylacetylene (4.00 g, 22.5 mmol, 2.25 eq.) was added a solution of Cl₃Al-PH₃ prepared according to example 1) in toluene (10.0 mL, 1 M, 10 mmol, 1.0 eq.). The yellow emulsion was stirred for 4 h at 20 °C and for 28 h at 60 °C. It was hydrolyzed with water (degassed with N₂, 3 mL) and stirred for 30 min at 20 °C. The organic phase was isolated and the aqueous phase extracted with toluene (3x 3 mL). The combined organic phases were filtered through a syringe filter, the solvent removed under reduced pressure and the residue recrystallized from refluxing *n*-hexane, yielding bis((Z)-(1,2-diphenylvinyl))phosphine as a pale yellow, crystalline solid (3.80 g, 9.7 mmol, 77 %).
**¹H-NMR** (300 MHz, CD₂Cl₂): δ = 7.42-7.11 (m, 10H, *Ph),* 6.99 (br. d, ³*J*_{PH}, ₜᵣₐₙₛ = 17.5, 2H, C=C*H*), 6.96-6.91 (m, 4H, p-*Ph*), 5.27 (dt, ¹*J*_{PH}, 228.3 Hz, *J*_{HH} = 0.9 Hz, 1H, P*H*) ppm.
**¹³C{¹H}-NMR** (75 MHz, CD₂Cl₂): δ = 144.3 (d, *J*_{PC} = 3.5 Hz, *C*), 141.3 (d, ²*J*_{PC} = 17.4 Hz, PCCH), 139.1 (d, ¹*J*_{PC} = 22.9 Hz, P*C*), 138.5 (d, *J*_{PC} = 1.5 Hz, *C*), 129.9 (d, *J*_{PC} = 5.9 Hz, *C*H), 128.4 (d, *J*_{PC} = 16.6 Hz, CH), 128.0 (d, *J*_{PC} = 2.9 Hz, *C*H), 127.6 (d, *J*_{PC} = 50.4 Hz, *C*H) ppm.
**³¹P-NMR** (121 MHz, C₆D₆): δ = -75.2 (dt, ¹*J*_{PH} = 226.9 Hz, ³*J*_{PH, trans} = 17.5 Hz) ppm.
**Analysis** Found C, 85.4; H, 6.1; N, 0.1. Calc. for C₂₈H₂₃P: C, 86.1; H, 5.9; N, 0.
**Mp** 70-73 °C (from *n*-hexane).

### Example 13): Preparation of bis((Z)-3-hexen-3-yl)phosphine, (Z)-3-hexen-3-yl)phosphine and (Z)-3-hexen-3-ylphosphinic acid

A solution of 3-hexyne (2.16 mL, 19 mmol, 1 eq.) in toluene (15 mL) was added to a solution of Cl₃Al-PH₃ prepared according to example 1) in toluene (1 M, 20.0 mL, 20 mmol, 1.05 eq.) over 45 min under vigorous stirring at 20 °C and the resulting pale white suspension stirred for 1 h at 20 °C. A phosphate buffer (pH = 7, 0.1 M, 5 mL) was added at 0 °C and the reaction mixture stirred for 1 h at 20 °C, after which the organic phase was transferred to a Schlenk flask via a Teflon cannula. By integration of the signals in the ³¹P-NMR spectrum the solution was determined to contain a mixture of 93 % of the primary phosphine (Z)-3-hexen-3-yl)phosphine and 7 % of the secondary phosphine bis((Z)-3-hexen-3-yl)phosphine. Vacuum distillation afforded pure bis((Z)-3-hexen-3-yl)phosphine as a colorless oil in the residue (200 mg, 1.01 mmol, 5 %).

To the distillate, pure (Z)-3-hexen-3-yl)phosphine was added H₂O₂ (5.8 mL, 30 w-%, 57 mmol, 1.5 eq.). The mixture was stirred for 30 min at 0 °C, before the organic phase was separated and the aqueous phase extracted with toluene (3x 5 mL). Removal of the volatiles from the combined organic phases under reduced pressure yielded (Z)-3-hexen-3-ylphosphinic acid as a colorless oil (2.11 g, 14.2 mmol, 75 %).

### (Z)-3-hexen-3-ylphosphine:

**³¹P-NMR** (101 MHz, toluene): δ = -150.1 (td, ¹*J*_{PH} = 197.2 Hz, ³*J*_{PH, trans} = 18.7 Hz) ppm.

### Bis((Z)-3-hexen-3-yl)phosphine:

**¹H-NMR** (300 MHz, C₆D₆): δ = 5.82 (dtt, ³*J*_{PH} = 19.6 Hz, ³*J*_{HH} = 7.2, ⁴*J*_{HH} = 1.5 Hz, 2H, C=C*H*), 4.16 (d, ¹*J*_{PH} = 214.9 Hz, 1H, P*H*), 2.50-2.21 (m, 4H, CH-C*H*₂), 2.24-1.95 (m, 4H, C-C*H*₂), 1.04 (t, ³*J*_{HH} = 7.4 Hz, 6H, C-CH₂-C*H*₃), 0.95 (t, ³*J*_{HH} = 7.5 Hz, 6H, CH--CH₂-C*H*₃) ppm.
**¹³C{¹H}-NMR** (75 MHz, C₆D₆): δ = 140.2 (d, ²*J*_{PC} = 21.7 Hz, C=*C*H), 136.1 (d, ¹*J*_{PC} = 16.4 Hz, *C*=CH), 32.9 (d, ²*J*_{PC} = 2.3 Hz, C=*C*H₂), 25.0 (d, ³*J*_{PC} = 18.8 Hz, CH=*C*H₂), 14.6 (s, CH-CH₂-*C*H₃), 14.2 (d, ³*J*_{PC} = 1.4 Hz, C-CH₂-*C*H₃) ppm.
**³¹P-NMR** (121 MHz, C₆D₆): δ = -86.2 (dtt, ¹*J*_{PH} = 214.8 Hz, ³*J*_{PH, trans} = 19.6 Hz, ³*J*_{PH} = 4.9 Hz) ppm.

### (Z)-3-hexen-3-ylphosphinic acid:

**¹H-NMR** (300 MHz, CDCl₃): δ = 12.57 (br. s, 1H, O*H*), 7.44 (d, ¹*J*_{PH} = 553.0 Hz, 1H, P*H*), 6.11 (dt, ³*J*_{PH} = 43.1, ³*J*_{HH} = 7.8 Hz, 1H, CC*H*), 2.50-2.32 (m, 2H, CC*H*₂), 2.32-2.16 (m, 2H, CCHC*H*₂), 1.08 (t, ³*J*_{HH} = 7.4 Hz, 3H, CCHCH₂C*H*₃), 1.02 (t, ³*J*_{HH} = 7.5 Hz, 3H, CCH₂C*H*₃) ppm.
**¹³C{¹H}-NMR** (75 MHz, CDCl₃): δ = 146.9 (d, ²*J*_{PC} = 13.3, CH), 133.0 (d, ¹*J*_{PC} = 125.4 Hz, *C*P), 25.7 (d, ³*J*_{PC} = 12.8 Hz, CCH*C*H₂), 22.6 (d, ²*J*_{PC} = 12.7 Hz, C*C*H₂), 14.0 (d, ³*J*_{PC} = 5.1 Hz, CCH₂*C*H₃), 13.9 (d, ⁴*J*_{PC} = 2.2 Hz, CCHCH₂*C*H₃) ppm.
**³¹P-NMR** (121 MHz, CDCl₃): δ = 23.1 (dm, ¹*J*_{PH} = 553.8 Hz) ppm.
**Analysis** Found C, 49.1; H, 8.8; N, 0.8. Calc. for C₆H₁₃O₂P: C, 48.7; H, 8.8; N, 0.

### Example 14): Preparation of tert.-butyl phosphine tBuPH₂

An argon-purged 200 mL stainless steel autoclave was charged with a solution of Cl₃Al-PH₃ prepared according to example 1) in toluene (1 m, 50.0 mL, 50 mmol, 1 eq.). Subsequently, isobutene (3 g, 50 mmol, 1 eq.) was condensed into the autoclave at 0 °C. The autoclave was sealed, the content agitated by magnetic stirring and heated to 70 °C for 8 h. The pressure was realeased and the autoclave was flushed with argon for 15 min through a cool trap at -80 °C. No residual isobutene condensed in the cooling trap. The ³¹P-NMR showed a triplet of decets at δ = -61.7 ppm, which can be assigned to the Cl₃Al-tBuPH₂ adduct. Upon addition of triethylamine (10 mL, 72 mmol, 1.44 eq.), tert.-butylphosphine is released from the adduct and distilled into a cool trap at -80 °C (4.0 g, 44 mmol, 88 %).
**³¹P-NMR** (121 MHz, CDCl₃): δ = -78.7 (tdec, ¹*J*_{PH} = 189.5 Hz, ³*J*_{PH} = 11.3 Hz) ppm.

### Example 15): Preparation of various primary phosphines

Equimolar amounts of Cl₃Al-PH₃ prepared according to example 1) in toluene (1 M) and the an alkene (1 eq) were mixed in a Schlenk tube. The mixtures were stirred at 70 °C and the reactions monitored by ³¹P-NMR spectroscopy. Subsequently, a phosphate buffer (pH = 7, 0.1 m, 5 mL) was added to the tubes to release the phosphines from their aluminum complexes.

The reaction times and analytical data are given in table 1:

**Table 1: Overview of substrates, reaction times and ³¹P-NMR spectroscopic data of the phosphines obtained from the reaction of Cl₃Al-PH₃ and various alkenes.**

| Alkene | t / h | ³¹P-NMR (101 MHz, toluene): δ / ppm |
|---|---|---|
| 1-hexene | 1.5 | -113.5 (br. t, *J*=188 Hz), -139.3 (br. t, *J*=189 Hz) |
| 2-hexene | 60 | -112.5 (br. t, *J*=188 Hz), -125.7 (br. t, *J*=189 Hz) |
| 3,3-dimethyl-1-butene | 17 | -97.4 (tdq, *J*=189, 21, 11 Hz), -133.5 (tdt, *J*=189, 10, 5 Hz) |
| cyclopentene | 60 | -120.7 (br. t, *J*=188 Hz) |
| cyclohexene | 2 | -112.4 (br. t, *J*=188 Hz) |
| *trans*-stilbene | 1.5 | -111.8 (br. t, *J*=191 Hz) |

## Claims

1. Compounds of formula (I): 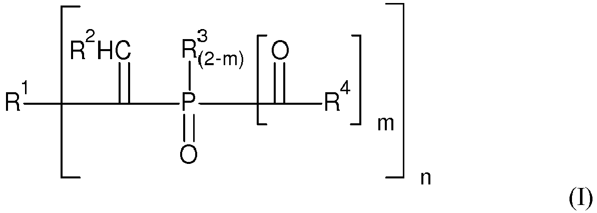 wherein
n is an integer, preferably an integer from 1 to 6, more preferably 1, 2, 3 or 4, and even more preferably 1 or 2 and most preferably 1
m is 1 or 2
R¹, if n is 1 is hydrogen, alkyl, alkenyl, alkynyl or aryl
R¹, if n is > 1 is alkane-n-yl, alkene-n-yl alkyne-n-yl or aryl-n-yl
R² is hydrogen, alkyl, alkenyl, alkynyl or aryl
R³ is alkyl, alkenyl, alkynyl, C₆-C₁₄-aryl that is unsubstituted or substituted by up to three identical or different substituents selected from the group consisting of fluorine, C₁-C₈-alkyl, C₁-C₈-haloalkyl and phenyl or is -(O⁻)(Cat⁺) wherein -(O⁻)(Cat⁺) as a whole represents hydroxy or Cat⁺ represents an p-valent cation
R⁴ is alkyl, alkenyl, alkynyl, aryl or heterocyclyl,
whereby
for R¹ the aforementioned alkyl, alkenyl, alkynyl, alkane-n-yl, alkene-n-yl alkyne-n-yl substituents and for R² and R³ the aforementioned alkyl, alkenyl and alkynyl substituents are
• either not, once, twice or more than twice interrupted by bivalent residues selected from the group consisting of unsubstituted aryldiyl
and additionally or alternatively are
• either not, once, twice or more than twice substituted by substituents selected from the group consisting of unsubstituted aryl and halogen, preferably selected from the group consisting of unsubstituted aryldiyl
and whereby
for R⁴ the aforementioned alkyl, alkenyl and alkynyl substituents are
• either not, once, twice or more than twice interrupted by non-successive functional groups selected from the group consisting of:
-O-, -NR⁵-, -CO-, -OCO-, -O(CO)O-, NR⁵(CO)-, -NR⁵(CO)O-, O(CO)NR⁵-, -NR⁵(CO)NR⁵-,
and additionally or alternatively are
• either not, once, twice or more than twice interrupted by bivalent residues selected from the group consisting of heterocyclo-diyl, and aryldiyl,
and additionally or alternatively are
• either not, once, twice or more than twice substituted by substituents selected from the group consisting of:
hydroxy, protected hydroxy, protected formyl, halogen, cyano, C₆-C₁₄-aryl; heterocyclyl, C₁-C₈-alkoxy, C₆-C₁₄-aryloxy, C₆-C₁₄-arylthio, C₁-C₈-alkylthio, -COOM, -SO₃M, -PO₃M₂, -PO(N(R⁵)₂)₂, -N(R⁵)₂, -PO(OR⁶)₂, SO₂N(R⁵)₂, -NR⁵SO₂R⁶, -N(R⁵)₂-, -N⁺(R⁵)₃An, -CON(R⁵)₂, -COR⁵,-(CO)OR⁵, -O(CO)OR⁶, NR⁵(CO)R⁵, -NR⁵(CO)OR⁵, O(CO)N(R⁵)₂,-NR⁵(CO)N(R⁵)₂, -Si(OP,⁶)_{y}(R⁶)_{3-y}, -OSI(OR⁶)_{y}(R⁶)_{3-y} with y = 1, 2 or 3
whereby in all formulae where used
R⁵ is independently selected from the group consisting of hydrogen, C₁-C₈-alkyl, C₆-C₁₄-aryl, and heterocyclyl or N(R⁵)₂ as a whole is a N-containing heterocycle,
R⁶ is independently selected from the group consisting of C₁-C₈-alkyl, C₆-C₁₄-aryl, and heterocyclyl or N(R⁶)₂ as a whole is a N-containing heterocycle
M is hydrogen, or 1/q equivalent of an q-valent metal ion or is an ammonium ion, a guanidinium ion, a once or more N-substituted guanidinium ion or a primary, secondary, tertiary or quarternary organic ammonium ion, in particular those of formula [N(C₁-C₁₈-alkyl)ₛHₜ]⁺ wherein s is 1, 2, 3 or 4 and t is (4-s) or heterocyclylium and
An⁻ is 1/r equivalent of an r-valent anion.

2. Compounds according to claim 1, wherein in formula (I)
n is 1
m is 1 or 2
R¹ is hydrogen, alkyl or aryl
R² is hydrogen alkyl or aryl
R³ is alkenyl, phenyl unsubstituted or substituted once, twice or three times by substituents selected from the group consisting of C₁-C₄-alkyl or C₁-C₄-haloalkyl or is -(O⁻)(Cat⁺) wherein -(O⁻)(Cat⁺) as a whole represents -OH or Cat⁺ represents 1/p equivalents of a p-valent cation
R⁴ is aryl
whereby for R¹ and R² the aforementioned alkyl substituents or for R³ the aforementioned alkenyl substituents are
• either not, once, twice or more than twice substituted by substituents selected from the group consisting of unsubstituted aryl.

3. Compounds according to claim 1 or 2, wherein in formula (I)
n is 1
m is 2
R¹ is hydrogen, C₁-C₆-alkyl or phenyl
R² is hydrogen, C₁-C₆-alkyl or phenyl
R³ is alkenyl, or -(O⁻)(Cat⁺) wherein -(O⁻)(Cat⁺) as a whole represents -OH or Cat⁺ represents 1/p equivalents of a p-valent cation
R⁴ is C₆-C₁₄-aryl
whereby
for R¹ and R² the aforementioned alkyl substituents or for R³ or the aforementioned alkenyl substituents are
• either not, once, twice or more than twice substituted by substituents selected from the group consisting of unsubstituted aryl

4. Compounds according to claim 1 being those of formula (II) 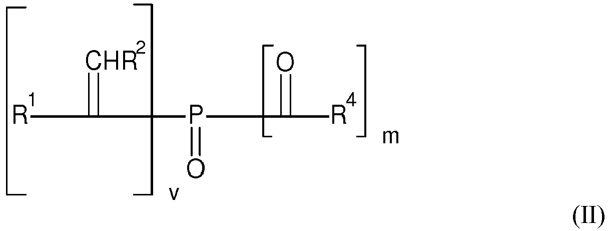 wherein
m is 1 or 2 and
v is (3-m)
and R¹, R² and R⁴ have the meaning defined in claim 1 or in claims 2 or 3.

5. Compounds according to claim 1 being those of formula (III) 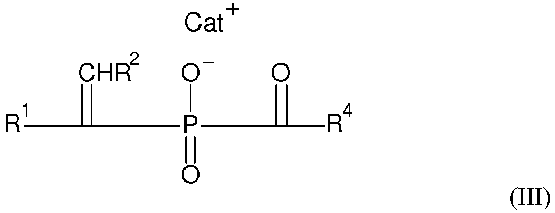 wherein
-(O⁻)(Cat⁺) as a whole represents -OH or Cat⁺ represents 1/p equivalents of a p-valent cation
and R¹, R² and R⁴ have the meaning defined in claim 1 or in claims 2 or 3.

6. The following compounds according to claim 1:
Bis(2,4,6-trimethylbenzoyl)-vinyl-phosphine oxide, bis(2,4,6-trimethylbenzoyl)-(1-phenylethen-1-yl)-phosphine oxide, bis(2,4,6-trimethylbenzoyl)-(3-hexen-3-yl)-phosphine oxide, (2,4,6-trimethylbenzoyl)-vinyl-phosphinic acid, (2,4,6-trimethylbenzoyl)-vinyl-phosphinic acid sodium salt, (2,4,6-trimethylbenzoyl)-vinyl-phosphinic acid tetra-(n-butyl) ammonium salt, (2,4,6-trimethylbenzoyl)-vinyl-phosphinic acid 1,1,3,3-tetra-*N*-methyl-guanidinium salt, bis-(benzoyl)-vinylphosphine oxide, bis(benzoyl)-(1-phenylethen-1-yl)-phosphine oxide, bis(benzoyl)-(3-hexen-3-yl)-phosphine oxide, (benzoyl)-vinyl-phosphinic acid, (benzoyl)-vinyl-phosphinic acid sodium salt, (benzoyl)-vinyl-phosphinic acid tetra-(n-butyl) ammonium salt, (benzoyl)-vinyl-phosphinic acid 1,1,3,3-tetra-N-methyl-guanidinium salt, 1-phenylethenyl-bis(2,4,6-trimethylbenzoyl)phosphine oxide and 1-methyl ethenyl-bis(2,4,6-trimethylbenzoyl)phosphine oxide.

7. A process for the preparation of compounds of formula (I) comprising the steps of:
a) reacting compounds of formula (IV) 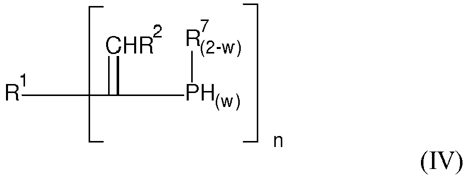 wherein
w is 1 or 2 and
n, R¹ and R² have the same meaning including preferred embodiments as defined for formula (I) in claims 1 to 4 and
R⁷ has the same meaning including preferred embodiments as R³ defined for formula (I) in claims 1 to 4 but excluding the meaning-(O⁻)(Cat⁺)
with m equivalents of compounds of formula (V), whereby m is 1 if w is 1 and m is 1 or 2 if w is 2 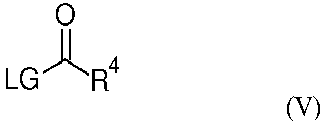 wherein
R⁴ has the same meaning including preferred embodiments as defined for formula (I) in claims 1 to 4 and
LG represents a leaving group, preferably chloro, bromo or iodo, C₁-C₈-alkylsulfonyloxy or C₁-C₈-alkoxy, more preferably chloro and
to obtain compounds of formula (VI) 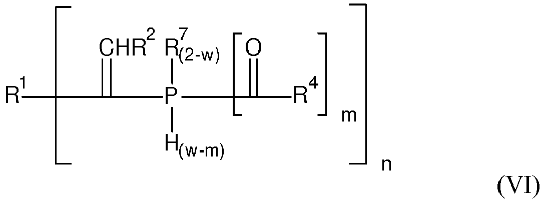
b) oxidizing compounds of formula (IV) to compounds of formula (I),
whereby in step a) the reaction with compounds of formula (V) is preferably carried out either
• in the presence of at least one Lewis acid or
• in the presence of at least one base.

8. The process according to claim 7, wherein the oxidation in step b) is carried out by reaction with molecular oxygen, hydrogen peroxide, sodium hypochlorite, sodium or potassium percarbonates, monoperoxodisulfate or monopersulfate, peracids such as peracetic acid and 3-chloroperbenzoic acid, hydroperoxides such as tert-butylhydroperoxide, permanganates such as potassium permanganate, chromates or dichromates such as potassium dichromate and aqueous solutions of all of the aforementioned, where R³ represents -(O⁻)(Cat⁺) and -(O⁻)(Cat⁺) does not represent -OH preferably in the presence of the cation Cat⁺.

9. Compounds of formulae (VI) as defined in claim 7.

10. Compounds of formula (IX) 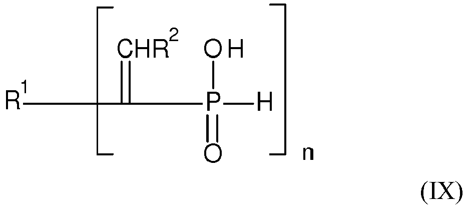 wherein
n, R¹ and R² have the same meaning as defined in claim 1 or claims 2 or 3.

11. A process for the preparation of compounds of formulae (XIIa) and (XIIb) 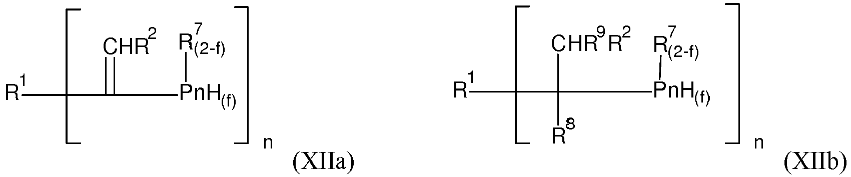 wherein
n, R¹ and R² and R⁷ have the same meaning including preferred embodiments as defined above for formula (I) in claims 1 to 3 and R⁷ has the same meaning as R³ defined for formula (I) in claim 1 or in claims 2 or 3 but each excluding the meaning -(O⁻)(Cat⁺)
Pn is a pnictogen selected from the group consisting of phosphorous arsenic and antimony, preferably phosphorous and arsenic, even more preferably phosphorous.
f is 0, 1 or 2 and
R⁸ and R⁹ are independently of each other hydrogen or alkyl
the process comprising the step of
aaa) reacting compounds of
• formula (XIIIa) (in order to obtain compounds of formula XXIIa) or
• formula (XIIIb) (in order to obtain compounds of formula XXIIb) or 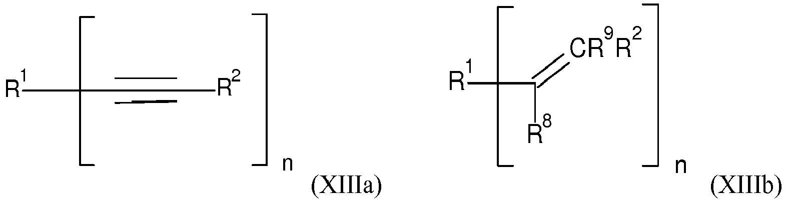 with compounds of formula (XIV) 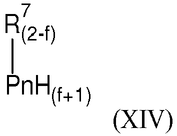 wherein Pn, R⁷ and f have the same meaning mentioned above
in the presence of at least one, preferably one Lewis acid.

12. The process according to claim 11, wherein compounds of formula (XIIIa) or (XIIIb) are reacted with phosphine (PH₃), arsine (AsH₃) or stibine (SbH₃), preferably phosphine (PH₃) or arsine (AsH₃), and more preferably with phosphine (PH₃) in the presence of at least one, preferably one Lewis acid.

13. Compounds of formula (XIIa) as defined in claim 11 except for vinylphosphine, divinylphosphine and trivinylphosphine.

14. Lewis adducts between boron trifluoride, boron trichloride, boron tribromide, aluminium trichloride, aluminum tribromide, triethyl aluminum, gallium trichloride, gallium tribromide, gallium triiodide, indium trifluoride, indium tribromide, indium triiodide titanium tetrachloride or titanium tetrabromide, preferably aluminum trichloride and phosphine (PH₃) as well as their solutions in aromatic hydrocarbons, preferably in toluene.

15. Photo-curable compositions comprising
I) at least one ethylenically unsaturated compound and
II) at least one compound of formula (I) as defined in claim 1 including preferred embodiments of claims 2 to 6.
